# EUROPEAN PATENT APPLICATION

(11) **EP 2 187 095 A1**
(43) Date of publication of application: **19.05.2010**
(21) Application number: 08829547.2
(22) Date of filing: 05.09.2008
(51) Int. Cl.: F16H 9/18

(54) **CONTINUOUSLY VARIABLE TRANSMISSION, ACTUATOR, AND INTERMEDIATE TERMINAL**

(30) Priority: 05.09.2007 JP 2007230105; 14.05.2008 JP 2008127260; 18.08.2008 JP 2008209690
(71) Applicant: NSK Ltd., Tokyo 141-8560 (JP)
(72) Inventor: YAMASHITA, Tomofumi, Fujisawa-shi, Kanagawa 251-8501 (JP); HASHIMOTO, Koji, Fujisawa-shi, Kanagawa 251-8501 (JP); SUZUKI, Kazuya, Fujisawa-shi, Kanagawa 251-8501 (JP)
(74) Representative: Grünecker, Kinkeldey, Stockmair & Schwanhäusser Anwaltssozietät
(86) International application number: PCT/JP2008/066125
(87) International publication number: WO 2009/031669

(57) **Abstract**

Since a threaded shaft 111 of a ball screw mechanism is disposed parallel to a pulley shaft 201 and an axial displacement of the threaded shaft 111 is converted into an axial displacement of a movable sheave 207 by a fork member 300 which swings, the inertia of a nut member 107 can be suppressed, and a high-speed control of a pulley width can easily be implemented. By the fork member 300 being interposed between the threaded shaft 111 and the movable sheave 207, even though the movable sheave 207 is inclined by a biased force of a belt 211, a the threaded shaft 111 is not inclined, thereby making it possible to suppress a reduction in fatigue life.

## Description

### Technical Field

The present invention relates to a continuously variable transmission, more particularly, to a vehicle continuously variable V-belt transmission, an actuator which is suitable for use in the transmission and an intermediate terminal which is suitable for use in the actuator.

### Background Art

Conventionally, continuously variable transmissions such as those described in Patent Documents 1 to 6 have been proposed which include an electric motor, pulleys each having a fixed sheave which is fixed to a pulley shaft and a movable sheave which is supported on the pulley shaft so as to move in an axial direction, a stroke mechanism for displacing the movable sheave in the axial direction by a rotating force of the electric motor so as to alter a width of a groove of the pulley, and a gear mechanism for transmitting the rotating force of the electric motor to the stroke mechanism.
Patent Document 1: JP-A-2003-97656
Patent Document 2: JP-A-2003-194179
Patent Document 3: JP-A-2007-10103
Patent Document 4: Specification of Japanese Patent No. 3948039
Patent Document 5: JP-A-2003-214195
Patent Document 6: JP-A-2007-120503

### Disclosure of the Invention

### Problem that the Invention is to Solve

Incidentally, in the continuously variable transmissions described in Patent Documents 1, 2 and 3, a ball screw mechanism or a feed screw mechanism is disposed on the periphery of the pulley shaft, and the movable sheave coupled to a threaded shaft is displaced in the axial direction by displacing the threaded shaft in the axial direction in accordance with an output from the electric motor. Here, the threaded shaft is hollow, and the pulley shaft is inserted into the hollow threaded shaft. Accordingly, a diameter of the threaded shaft and a diameter of a threaded nut which incorporates the threaded shaft tend to be increased. Also, when the threaded nut rotates by receiving rotation force of electric motor, the inertia of the nut is increased, resulting in a problem that a high-speed control of the pulley width becomes difficult. For example, there is caused a problem that when driven at high speeds, it becomes difficult to stop the nut in a target position within a short period of time. When power transmission gears are provided on an outer circumference of the nut, the inertia of the nut is increased further, and therefore the problem is particularly made conspicuous.

Further, in the case of the ball screw mechanism, a spiral rolling path is formed between the threaded shaft and the nut, so that balls roll through the rolling path to reduce friction. Here, since the belt engages with the movable sheave only half a full circumference thereof, when a belt driving force is increased, the movable sheave is pushed in a direction in which it falls, so that the movable sheave becomes easy to be inclined.
When the movable sheave is inclined, however, the threaded shaft which is coupled to the movable sheave is inclined, and an unbalanced load applies between the nut and the threaded shaft, thereby the space within the spiral rolling path is locally constricted, leading to a fear that a rolling failure of balls and a reduction in fatigue life of the constituent components may be caused.

On the other hand, in a throttle controller described in Patent Document 4, a shaft is press fitted and fixed in a hole formed in a housing made of aluminum, and this hole communicates into through a hole having a different function. Here, when the hole having the different function communicates into through the outside, even though the shaft is press fitted in the hole, due to working errors of the shaft and the hole, the shaft cannot be uniformly in contact with the hole around a full circumference of the hole, therefore, there is caused a fear that water and/or dirt infiltrates into the hole via a minute gap produced between the hole and the shaft.

In a throttle controllers described in Patent Documents 1 and 2, a portion of an end face in a housing made of aluminum, the portion which is in contact with a resin cover, and an outer circumferential portion of a hole in the aluminum housing, the hole which is fitted in a gear supporting shaft do not exist on the same plane. On the other hand, since a seal is in contact with the end face of the aluminum housing and an end face of a gear slides on the outer circumferential portion of the hole in which the shaft is fitted, the end face and the outer circumferential portion are preferably machined so that their rough casting surfaces are made smooth.
However, in a case where the end face of the aluminum housing and the outer circumferential portion of the hole do not exist on the same plane, an end face machining has to be performed twice, resulting in a problem that it takes more time for manufacturing. In addition, in a case where the outer circumferential portion of the hole is positioned lower than the end face of the housing, the outer circumferential portion has to be machined with a cutter whose diameter is so small that the cutter is prevented from being in contact with the end face of the housing in machining the outer circumferential portion of the hole, resulting in a problem that the machining efficiency is deteriorated.

It is considered that intermediate terminals are interposed between terminals of the electric motor and connector terminals to form an electric power transmission path into the electric motor which drives the continuously variable transmission. For example, in Patent Documents 5 and 6, intermediate terminals, which are female terminals, engage with motor terminals and connector terminals for exterior connection and these terminals are arranged in series. Therefore, there is a problem that an axial length of the intermediate terminals becomes long.
In the intermediate terminals of Patent Document 6, in a case where there are caused deviations from the size of the motor terminals and the position of the connector terminals for exterior connection, there is caused a fear that the intermediate terminals are deformed, that a connection between a male terminal portion and a female terminal portion occurs only on one of the terminals or that the terminals of both poles are not in contact, and only the terminals of either of the poles contact.

The invention has been made in view of the problems inherent in the related art, and a first object of the invention is to provide a continuously variable transmission which can be controlled quickly and can ensure high reliability. A second object of the invention is to provide an actuator which can suppress the infiltration of foreign matters from the outside effectively and can enhance machinability.
A third object of the invention is to provide an actuator and an intermediate terminal which are compact in size and which can facilitate and ensure a connection to terminals for supplying electric power to a motor.

### Means for Solving the Problem

With a view to achieving the first object, according to a first aspect of the invention, there is provided a continuously variable transmission including:
a fixed sheave which is fixed to a pulley shaft so as to integrally rotate;
a movable sheave which is supported so as to move in an axial direction along the pulley shaft;
a belt which are disposed between the fixed sheave and the movable sheave; and
an actuator which makes the movable sheave move in the axial direction so as to alter a pulley groove width,
wherein the actuator has:
an electric motor;
a speed reduction mechanism to transmit a rotational force generated by the electric motor;
a rotational element into which power of the electric motor is inputted via the speed reduction mechanism;
an axially displaceable element which is displaced in the axial direction in accordance with a rotating amount of the rotational element; and
a swing member to swing whose one end is coupled to the axially displaceable element and the other end is coupled to the movable sheave.

With a view to achieving the second object, according to a third aspect of the invention, there is provided an actuator including:
a housing which includes a housing main body and a cover member;
an electric motor which is mounted on the housing main body and which has a rotating shaft;
a driving mechanism which includes a gear to which a rotational force is transmitted from the rotating shaft, a rotational element to which the rotational force is transmitted from the gear and an axially displaceable element which is moved in an axial direction in accordance with a rotating movement of the rotational element, and
a sensor to detect an axially moved amount of the axially displaceable element,
wherein the housing main body has:
a first hole in which a support shaft of the gear is fitted;
a second hole which accommodates the axially displaceable element and which has an axis parallel to an axis of the first hole; and
a third hole which intersects the second hole and in which the sensor is mounted,
wherein the first, second and third holes are formed to communicate into each other;
wherein the second hole is sealed by a seal;
wherein the third hole is sealed by the sensor.

According to the continuously variable transmission of the first aspect of the invention, the actuator has: the electric motor; the speed reduction mechanism for transmitting a rotational force generated by the electric motor; the rotational element into which power of the electric motor is inputted via the speed reduction mechanism; the axially displaceable element which is displaced in the axial direction in accordance with a rotating amount of the rotational element; and the swing member which is coupled to the axially displaceable element at one end and is coupled to the movable sheave at the other end thereof and which can swing. Therefore, the inertia of the rotational element can be suppressed, and the high speed control of the pulley width can be implemented. By interposing the swing member, even though the movable sheave is inclined, the axially displaceable element is not inclined, and a reduction in fatigue life or the like can be suppressed.

In a case where a bearing is disposed between the other end of the swing member and the movable sheave, friction at the other end of the swing member can be suppressed.

According to the third aspect of the invention, the first hole to the third hole are made to communicate with each other, the second hole is sealed by the seal, and the third hole is sealed by the sensor. Therefore, since the second hole is sealed by the seal and the third hole is sealed by the sensor so as to produce a closed space, infiltration of foreign matters from the outside through the first hole is suppressed irrespective of machining accuracy of the first hole and the supporting shaft.

In a case where only a portion of the first hole in which the supporting shaft of the gear is fitted is machined, machining costs can be reduced.

In a case where the housing main body is made of a metal, the cover member is made from a resin, and an contact portion of the housing member with the cover member and an outer circumferential portion of the first hole exist on the same plane, the contact portion and the outer circumferential portion can be machined at the same time through single machining using a relatively large tool, thereby the machining efficiency can be enhanced.

It is preferable that an annular sensor collar is fitted on the axially displaceable element, that the axially displaceable element is supported on the housing main body via a cylindrical bush, and that an outside diameter of a portion on which the sensor collar is fitted and an outside diameter of a portion on which the bush is fitted is smaller than a groove root diameter of a male thread groove of the axially displaceable element. By adopting this configuration, the sensor collar can be surely fitted on the axially displaceable element, and smooth sliding can be performed on the portion on which the bush is fitted.

It is preferable that the sensor collar is press fitted on the axially displaceable element, that the sensor is a rotary potentiometer for measuring a displacement amount through rotation of an arm portion, and that the arm portion is biased by a coil spring disposed in an interior thereof in a direction in which the sensor collar, which is press fitted on the axially displaceable element, is prevented from being dislocated. Thus, by applying to a spring force of the coil, the spring force which applies to an arm portion of the sensor, in a direction which the sensor color fitted on the axially displaceable element is prevented from being dislocated (in an inserting direction in which the sensor collar is fitted), the sensor collar can be prevented from deviating from the axially displaceable element, and reducing measuring accuracy of the sensor.

The arm portion preferably projects outwards from an outside diameter of a spigot portion which fits in the third hole of the sensor.

It is preferable that the actuator is provided outside of the housing which covers the continuously variable transmission and that the swing member extends via an opening provided in the housing.

It is preferable that the continuously variable transmission includes a drive pulley portion and a driven pulley portion which each have a fixed sheave and a movable sheave and that when viewed in a direction which is at right angles to an axis of the drive pulley portion, the actuator is disposed between the drive pulley portion and the driven pulley portion.

It is preferable that the rotational element is a nut or a threaded shaft, that the axially displaceable element is a threaded shaft or a nut, and that the ball screw mechanism is made up of the nut and the threaded shaft.

The actuator preferably has a rotary potentiometer for detecting a rotational angle of the rotational element.

With a view to achieving the third object, according to a thirteenth aspect of the invention, there is provided an actuator as set forth in the third aspect of the invention,
wherein a coupling member having conductive terminals is provided on the cover member of the housing so as to be integral with the cover member,
wherein the motor has conductive terminals which extend substantially parallel to a direction in which the terminals of the coupling member extend,
wherein the cover member has conductive intermediate terminals provided thereon, and
wherein the intermediate terminals extend so as to be substantially at right angles to the directions in which the terminals of the coupling member and the terminals of the motor extend, and connect the terminals of the coupling member with the terminals of the motor.

With a view to achieving the third object, according to a fifteenth aspect of the invention, there is provided an intermediate terminal including:
a central plate portion;
a first end plate portion which is coupled to one end of the central plate portion at a center thereof and which extends substantially at right angles to the central plate portion; and
a second end plate portion which is coupled to the other end of the central plate portion at a center thereof and which extends substantially at right angles to the central plate portion and in an opposite direction to the direction in which the first end plate portion extends,
wherein two first gaps are formed at both ends of the first end plate portion by bending respective distal ends of the ends of the first end plate portion towards a center thereof,
wherein two second gaps are formed at both ends of the second end plate portion by bending respective distal ends of the ends of the second end plate portion towards a center thereof, and
wherein the first gaps constitute first female terminal portions and the second gaps constitute second female terminal portions.

According to the actuator of the thirteenth aspect of the invention, the intermediate terminals extend in the direction which is substantially at right angles to the directions in which the terminals of the coupling member and the terminals of the motor extend so as to connect the terminals of the coupling member with the terminals of the motor. Namely, compared with a case where a connecting portion between the terminals of the motor and the intermediate terminals and a connecting portion between the intermediate terminals and the coupling portion are aligned on the straight line, the actuator of the invention can be configured more compact in size. Further, even though there is caused a variation in size and connecting position of the coupling member or the terminals, such an error can be absorbed so as to ensure the connection. In particular, when the coupling member is molded through insert molding, since the relative position to the cover member is easy to deviate, it is effective to apply the invention to such a case.

It is preferable that the cover member has a recess portion which can receive the intermediate terminals and that a dimension of the recess portion at an entrance side is smaller than a dimension of the recess portion at a deeper side so that the intermediate terminals are made difficult to be dislocated from the cover member.

In a case where first and second male terminal portions are connected respectively to the first and second female terminal portions of the intermediate terminal of the third aspect of the invention, a connecting portion between the first male terminal portions and the first female terminal portions and a connecting portion between the second female terminal portions and the second male terminal portions are not positioned on a straight line but the connecting portions are positioned substantially parallel to each other. Therefore, compared with a case where the first male terminal portions and the second male terminal portions are disposed on a straight line relative to the intermediate terminal, the connecting construction of the terminal can be made compact. Further, even though there is caused a variation in size and connecting position of the first male terminal portions or the second terminal male terminal portions, such errors can be absorbed, so as to ensure the connection. In addition, the intermediate terminal of the invention can easily be formed by bending a single metallic plate material, for example, and can avoid manufacturing failures which would otherwise be caused as through welding or the like. In addition, since no attention has to be paid to directionality in assembling, an erroneous assembling can be avoided.

In a case where the first female terminal portions and the second female terminal portions are made open in opposite directions, for example, when the second male terminal portions serve as end portions of the coupling member which is insert molded into the cover member and the first male terminal portions serve as the terminals of the motor mounted on the housing main body, since, only by mounting the cover member on the housing main body, an electrical connection can be established via the intermediate terminals, the assembling performance is enhanced.

It is preferable that the two first female terminal portions have different shapes and that the two second female terminal portions have different shapes.

In a case where a projection is formed each on at least one of the first female terminal portions and on at least one of the second female terminal portions, when the intermediate terminals engage the coupling member or the terminals, the press contacting force and conductivity are preferably enhanced.

### Brief Description of the Drawings

Fig. 1 is a sectional view of a continuously variable transmission which is a first embodiment.
Fig. 2 is a view of the continuously variable transmission as viewed in a direction indicated by an arrow II in Fig. 1 in such a state that a cover member is removed from the configuration shown in Fig. 1, with omitting gear teeth.
Fig. 3 is a view of the continuously variable transmission as viewed in a direction indicated by an arrow III in Fig. 1 in such a state that the cover member is removed from the configuration shown in Fig. 1.
Fig. 4 is a view of the configuration in Fig. 1 as viewed in a direction indicated by an arrow IV, with omitting a housing.
Fig. 5A is a front view of a fork member.
Fig. 5B is a side view of the fork member.
Fig. 5C is a perspective view of the fork member.
Fig. 6 is a sectional view of a continuously variable transmission which is a second embodiment.
Fig. 7 is a view of the configuration in Fig. 6 as viewed in a direction indicated by an arrow VII.
Fig. 8 is a view of the configuration in Fig. 7 as viewed in a direction indicated by arrow VIII.
Fig. 9 is a view of the configuration in Fig. 8 as viewed in a direction indicated by an arrow IX.
Fig. 10A is a view of the configuration in Fig. 9 as viewed in a direction indicated by arrow X.
Fig. 10B is a sectional view of the configuration in Fig.
10A taken along the ling XB-XB.
Fig. 11 is a view of an actuator as viewed in the same direction as that in Fig. 8, with removing a cover member.
Fig. 12 is a view of the construction in Fig. 11 as viewed in a direction indicated by an arrow XII.
Fig. 13 is a view of the cover member as viewed from an inside thereof.
Fig. 14 is a similar view to Fig. 12 in such a state that a gear and a sensor are removed, with mounting a motor and a ball screw mechanism.
Fig. 15 is a view of the configuration in Fig. 4 as viewed in a direction indicated by an arrow XV.
Fig. 16 is a view of the configuration in Fig. 15 taken along the line XVI-XVI and as viewed in a direction indicated by arrows attached to the line.
Fig. 17 is a view of the configuration in Fig. 15 taken along the line XVII-XVII and as viewed in a direction indicated by arrows attached to the line.
Fig. 18 is a view similar to Fig. 14 with removing the motor.
Fig. 19 is a view of the configuration in Fig. 18 taken along the line XIX-XIX and as viewed in a direction indicated by arrows attached to the line.
Fig. 20 is a view of the configuration in Fig. 18 taken along the line XX-XX and as viewed in a direction indicated by arrows attached to the line.
Fig. 21 is a view similar to Fig. 20 with removing the motor.
Fig. 22 is a view of the configuration in Fig. 21 taken along the line XXII-XXII and as viewed in a direction indicated by arrows attached to the line.
Fig. 23 is a perspective view of a housing 101 with attaching a sensor 118.
Fig. 24 is a perspective view of the housing 101 with removing the sensor 118.
Fig. 25 is a top view of the sensor 118.
Fig. 26 is a side view of the sensor 118.
Fig. 27 is a bottom view of the sensor 118.
Fig. 28 is a side view of a threaded shaft 111.
Fig. 29 is a view showing a state in which a sensor collar 113 is mounted on the threaded shaft 111.
Fig. 30 is a view of the configuration in Fig. 29 taken along the line XXX-XXX and as viewed in a direction indicted by arrows attached to the line.
Fig. 31 is a view similar to Fig. 14 which shows a state in which the motor is assembled on to a housing main body 101A.
Fig. 32 is a view of the configuration in Fig. 31 taken along the line XXXII-XXXII and as viewed in a direction indicated by arrows attached to the line.
Fig. 33 is a side view of a motor 102.
Fig. 34 is a front view of a motor assembling jig J.
Fig. 35 is a side view of the motor assembling jig J.
Fig. 36 is a view showing a state in which the continuously variable transmission according to the second embodiment is actually mounted.
Fig. 37 is a view showing a state in which a continuously variable transmission according to a third embodiment is actually mounted.
Fig. 38 is a sectional view of the continuously variable transmission which constitutes the embodiment.
Fig. 39 is a view of the configuration in Fig. 38 as viewed in a direction indicated by an arrow XXXIX with removing a cover member.
Fig. 40 is a view of the configuration in Fig. 39 as viewed in a direction indicated by an arrow XL.
Fig. 41 is a view of the configuration in Fig. 38 as viewed in a direction indicated by an arrow XLI.
Fig. 42A is a front view of a fork member.
Fig. 42B is a side view of the fork member.
Fig. 42C is a perspective view of the fork member.
Fig. 43 is a view of the configuration in Fig. 40 taken along the line XLIII-XLIII and as viewed in a direction indicated by arrows attached to the line.
Fig. 44 is a side view of a motor.
Fig. 45 is a view of the motor in Fig. 44 as viewed in a direction indicated by an arrow XLV.
Fig. 46 is a side view of a cover member used in this embodiment.
Fig. 47 is a view of the cover member in Fig. 46 as viewed in a direction indicated by an arrow XLVII (from outside).
Fig. 48 is a view of the cover member in Fig. 46 as viewed in a direction indicated by an arrow XLVIII (from inside).
Fig. 49 is a view of the configuration in Fig. 48 taken along the line XLIX-XLIX and as viewed in a direction indicated by arrows attached to the line.
Fig. 50 is a view similar to Fig. 48 which shows a cover member into which a coupling member is not formed by insert molded.
Fig. 51 is a view of the configuration in Fig. 50 taken along the line LI-LI and as viewed in a direction indicated by arrows attached to the line.
Fig. 52 is a view of the configuration in Fig. 50 taken along the line LII-LII and as viewed in a direction indicated by arrows attached to the line.
Fig. 53 is a view of the configuration in Fig. 50 taken along the line LIII-LIII and as viewed in a direction indicated by arrows attached to the line.
Fig. 54 is a view similar to Fig. 48 which shows a cover member into which a coupling member is formed by insert molded.
Fig. 55 is a view of the configuration in Fig. 54 as viewed in a direction indicated by an arrow LV.
Fig. 56 is a perspective view of an intermediate terminal 250.
Fig. 57 is a view of the configuration in Fig. 56 as viewed in a direction indicated by an arrow LVII.
Fig. 58 is a view of the configuration in Fig. 56 as viewed in a direction indicated by an arrow LVIII.
Fig. 59 is a view of the configuration in Fig. 56 as viewed in a direction indicated by an arrow LIX.
Fig. 60 is a view of the configuration in Fig. 56 as viewed in a direction indicated by an arrow LX.
Fig. 61 is a view showing a state in which intermediate terminals 250, 250 engage coupling members 101x, 101x.
Fig. 62 is a view of the configuration in Fig. 61 as viewed in a direction indicated by an arrow LXII.
Fig. 63 is a view of the configuration in Fig. 61 as viewed in a direction indicated by an arrow LXIII.

### Description of Reference Numerals and Characters

100, 100' actuator; 101 housing; 102 motor; 103 drive gear; 104 intermediate shaft; 105a large gear; 105b small gear; 106 driven gear; 107 nut member; 108 ball bearing; 109 bearing holder; 110 bush; 111 threaded shaft; 112 ball; 113 sensor collar; 114 snap ring; 115 bush; 116 seal; 117 pressing member; 118 sensor; 119 snap ring; 200 drive pulley portion; 201 pulley shaft; 202 ball bearing; 203 fixed sheave; 204 washer; 206 sleeve; 207 movable sheave; 208 ball bearing; 209 bearing holder; 210 stopper; 211 belt; 215 nut; 230 driven pulley portion; 233 fixed sheave; 237 movable sheave; 250 intermediate terminal; 251 central plate portion; 252 end plate portion; 300 fork member; 301 arm portion; 302 bridge portion; B machine screw; Bt bolt; J jig; J1 large hole; J2 small hole; OR 0 ring; PJ projecting portion; S shaft; TB tube.

### Best Mode for Carrying out the Invention

### <First Embodiment: Continuously Variable Transmission and Actuator>

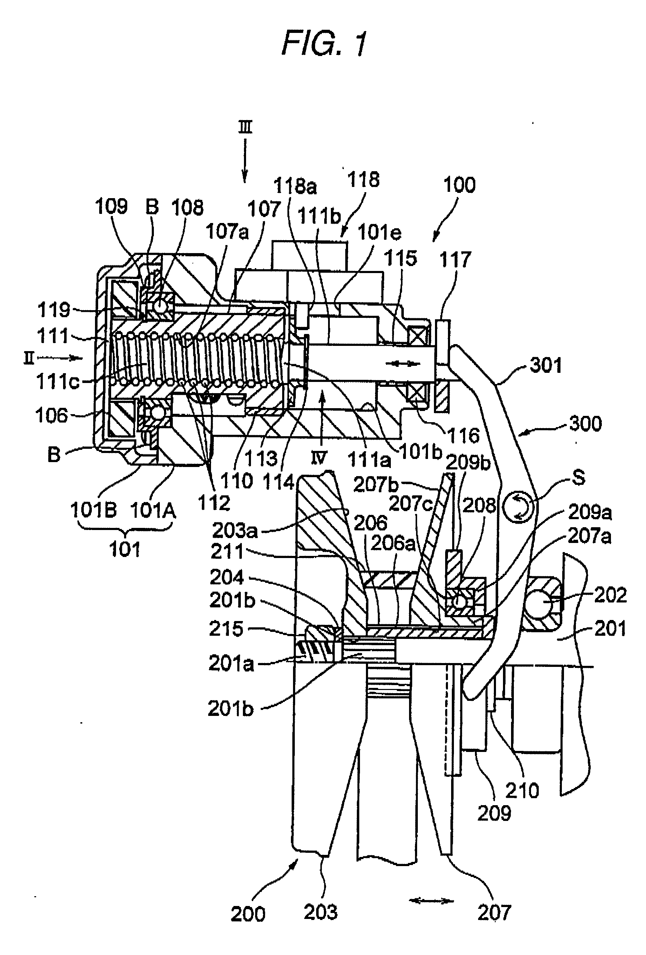

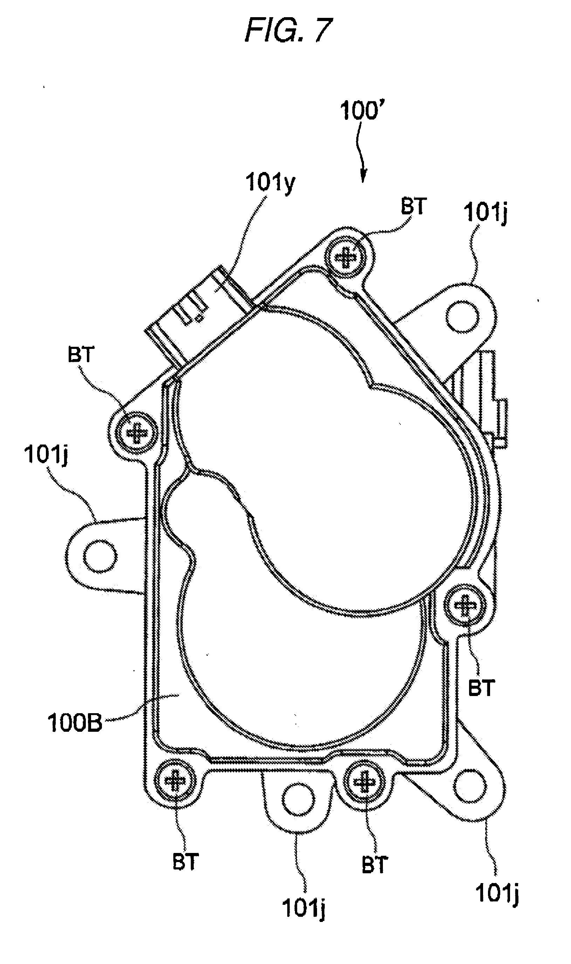

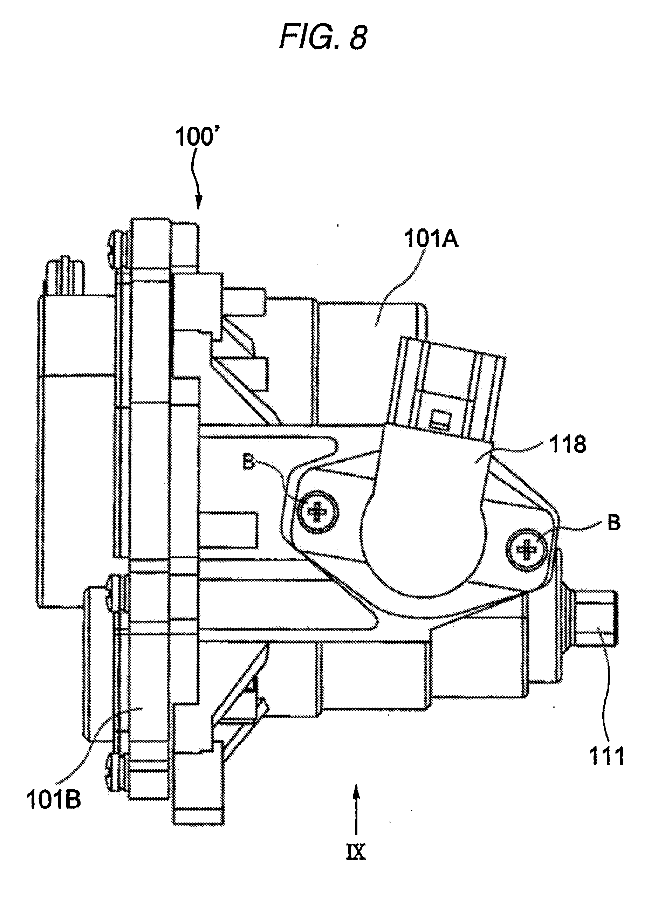

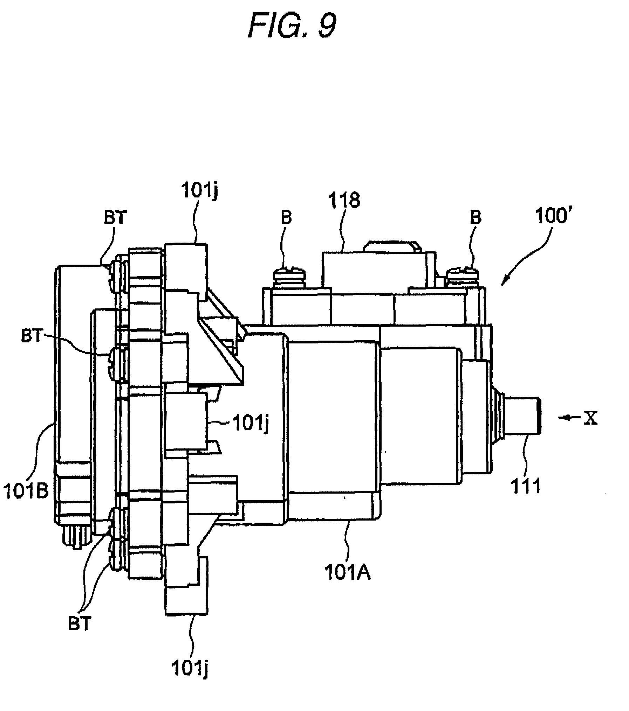

A first embodiment of the invention will be described by reference to Figs. 1 to 9.

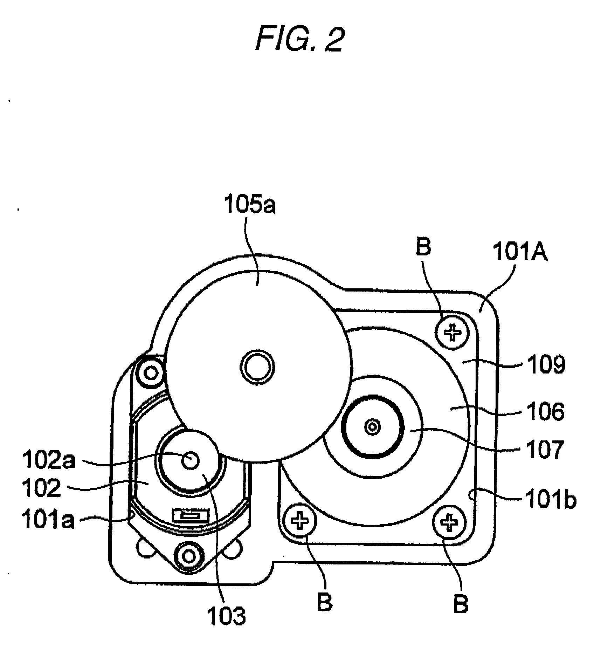

In an actuator 100 shown in Fig. 1, a housing 101, which is to be fixed to an engine case, not shown, is made up of a hollow housing main body 101A and a cover member 101B which is assembled to an end face of the housing main body 101A with bolts, not shown. As is shown in Fig. 2, a motor compartment 101a and a threaded shaft compartment 101b are defined in an interior of the housing main body 101A. A motor 102 (preferably, a servomotor with a brake), which controlled by an exterior controller (not shown), is fixed in the motor compartment 101a.
In this embodiment, although the actuator 100 is fixed to the engine case and, as is shown in Fig. 1, disposed above a drive side pulley portion 200, which will be described later, as a modified example to this, the actuator 100 may be disposed inside a belt 211 between the drive side pulley portion 200 and a driven side pulley portion.

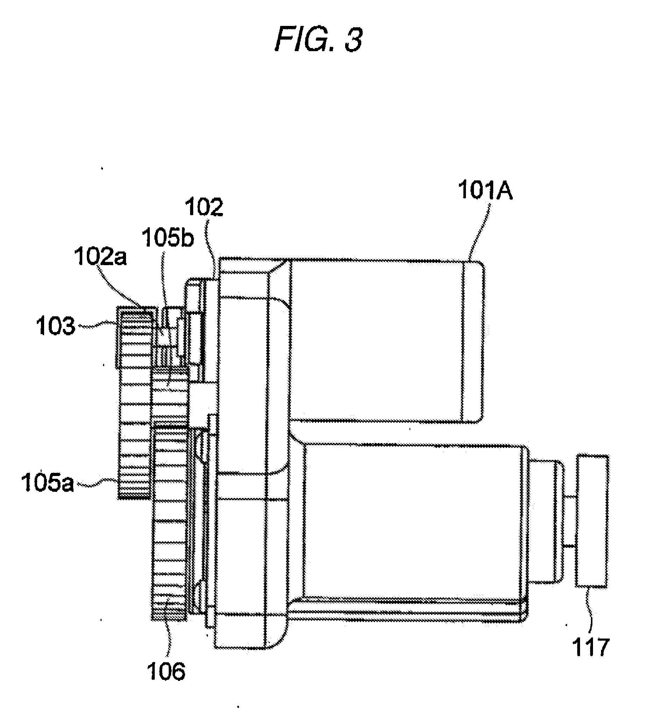

A metallic drive gear 103 is press fitted on an end portion of a rotational shaft 102a of the electric motor 102. As shown in Fig. 3, a large gear 105a having a large number of teeth and a small gear 105b having a small number of teeth are formed integrally adjacent to the drive gear 103. These gears 105a, 105b are supported rotatably on an intermediate shaft 104 which is provided in the housing main body 101A. The large gear 105a meshes with the drive gear 103, and the small gear 105b meshes with a resin driven gear 106. The drive gear 103, the large gear 105a, the small gear 105b and the driven gear 106 configure a speed reduction mechanism.

In Fig. 1, female spline grooves are formed on an inner circumference of the driven gear 106 so as to engage male spline grooves formed on an outer circumference of a hollow cylindrical nut member 107, thereby, the driven gear 106 and the nut member 107 can integrally rotate. However, the driven gear 106 and the nut member 107 may be restricted relative rotation.
An inner ring of a ball bearing 108 is fitted on the outer circumference of the nut member 107. This inner ring is restricted from a relative displacement in an axial direction by a snap ring 119 which engages a circumferential groove on the nut member 107. On contrary, an outer ring of the ball bearing 108 is fitted in a step portion 101d at an end portion of the housing main body 101A and is fastened by a bearing holder 109 which is fixed to the housing main body 101A with machine screws B. An outer circumference of a distal end (a right end in Fig. 1) of the nut member 107 is supported by a bush 110 so as to slide freely in a rotating direction to an inner circumference of the housing main body 101A.

A threaded shaft 111 is inserted into the nut member 107. The threaded shaft 111 is configured by a thread portion 111a having a male thread groove 111c and a round shaft portion 111b which is coupled integrally to the thread portion 111a.
A female thread groove 107a is formed on an inner circumferential surface of the nut member 107 so as to face the male thread groove 111c, and a large number of balls 112 are disposed to roll freely in a spiral space (a rolling path) which is formed by the male thread grooves 111c and the female thread grooves 107a.
An axial displacement of the nut member 107 relative to the housing main body 101A is restricted via the ball bearing 108, and the nut member 107 is only allowed to rotate. On contrary, the threaded shaft 111 is not allowed to rotate relatively by a detent (not shown) but is allowed to be displaced relatively in the axial direction in the threaded shaft compartment 101b. The threaded shaft 111, which is an axially displaceable element, the nut member 107, which is a rotational element, and the balls 112, which are rolling elements, configure a ball screw mechanism.

An annular sensor collar 113 is press fitted on an outer circumference of the round shaft portion 111b in vicinity of the threaded portion 111a and is restricted from being displaced relatively in the axial direction by a snap ring 114 which engages a circumferential groove on the round shaft portion 111b. A distal end of the round shaft portion 111b is supported on an inner circumference of the housing main body 101A via a bush 115 and is sealed against the housing main body 101A by a seal 116 which is disposed outwards of the bush 115. A pressing member 117 (whose lower half portion only is shown as sectioned in Fig. 1) having a doughnut-like plate shape is press fitted on an end portion of the threaded shaft 111 which projects from the housing main body 101A.

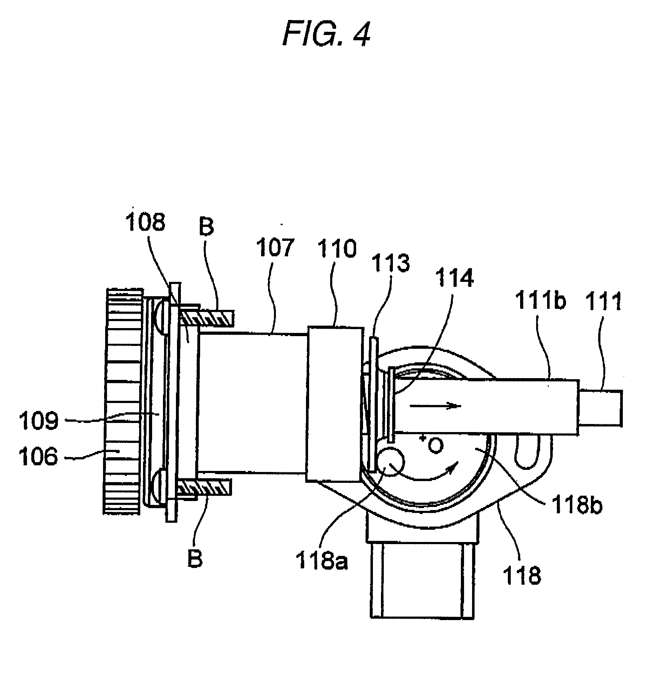

The housing main body 101A has an elongated hole 101e on a side thereof (at an upper portion in Fig. 1). A sensor 118 is mounted on the housing main body 101R so as to shield the elongated hole 101e from the outside. A cylindrical pin-shaped sensor arm 118a extends from a side of the sensor 118 through the elongated hole 101e so as to be in contact with the sensor collar 113 at a distal end thereof. The sensor arm 118a is coupled to a rotary potentiometer (not shown) in an interior of the sensor 118 and is planted in a position which is eccentric relative to a rotational plate 118b which rotates together (refer to Fig. 4).

In Fig. 4, when the threaded shaft 111 is displaced rightwards in the axial direction, the sensor arm 118a is pushed by the sensor collar 113, and the rotational plate 118b rotates. The potentiometer generates a signal which corresponds to a rotating amount of the rotational plate 118b. The exterior controller (not shown) measures an axial displacement amount of the threaded shaft 111 based on the signal output by the sensor 118.
On contrary, the rotational plate 118b is biased clockwise as viewed in Fig. 4 by a coil spring or the like, not shown, which is provided in the interior of the sensor 118. Because of this, when the threaded shaft 118 is displaced in an opposite direction (leftwards in the axial direction in Fig. 4), the sensor arm 118a also follows the movement of the threaded shaft 111, and the potentiometer generates a signal which corresponds to a rotating mount of the rotational plate 118b.

Next, the drive side pulley portion 200 of the continuously variable transmission will be described.
In Fig. 1, the pulley shaft 201 into which power from an output shaft of an engine is inputted is supported rotatably on the engine case (not shown) by a ball bearing 202. A male thread portion 201a and male spline grooves 201b are formed from a distal end side on an outer circumference of the pulley shaft 201.

In Fig. 1, a right side surface of the fixed sheave 203 is formed into a conical surface 203a, and the fixed sheave 203 has female spline grooves 203b on an inner circumference thereof. By engaging the female spline grooves 203b with the male spline grooves 201b, the fixed sheave 203 is mounted on the pulley shaft 201 to integrally rotate. A cylindrical sleeve 206 is press fitted on the outer circumference of the pulley shaft 201, as shown in Fig. 1, a right end of the cylindrical sleeve 206 impinges on a stopper 210. The fixed sheave 203 is pressed against a nut 215 which is screwed on the male thread portion 201a with a washer 204 held therebetween so as to be fixed to the pulley shaft 201 in a state that the fixed sheave 203 is impinged on a left end of the cylindrical sleeve 206.

Male spline grooves 206a are formed on an outer circumference of the sleeve 206.
In a movable sheave 207, a left end of a central cylindrical portion 207a extends in a flange-like fashion, and a left side surface of the movable sheave 207 is formed into a conical surface 207b which is a mirror-image form against the conical surface 203a of the fixed sheave 203. A space between the conical surface 207b of the movable sheave 207 and the conical surface 203a of the fixed sheave 203 increases gradually as the conical surfaces extend radially outwards.
Female spline grooves 207c are formed on an inner circumference of the central cylindrical portion 207a. By engaging the female spline grooves 207c with the male spline grooves 206a, the movable sheave 207 is mounted on the sleeve 206 so as to rotate together therewith while being allowed to move in the axial direction. A key connection may be adopted in place of the spline engagement.

An inner ring of a ball bearing 208 is press fitted on an outer circumference of the central cylindrical portion 207a.
An outer ring of the ball bearing 208 is fitted in a bearing holder 209.
The bearing holder 209 has a cylindrical portion 209a which fits on the ball bearing 208, an outer flange 209b which extends radially outwards from a left end, as viewed in Fig. 1, of the cylindrical portion 209a, and an inner flange 209c which extends radially inwards from a right end, as viewed in Fig. 1, of the cylindrical portion 209a. The outer ring of the ball bearing 208 impinges on the inner flange 209c.
The belt 211 having a trapezoidal cross section is provided between the fixed sheave 203 and the movable sheave 207. An opposite end of the belt 211 is disposed between half cones of the driven side pulley portion of the continuously variable transmission. The driven side pulley portion which is coupled to an output shaft (not shown) to transmit power to a road wheel has the same configuration as that of the drive side pulley portion 200, and therefore, the description thereof will be omitted here.

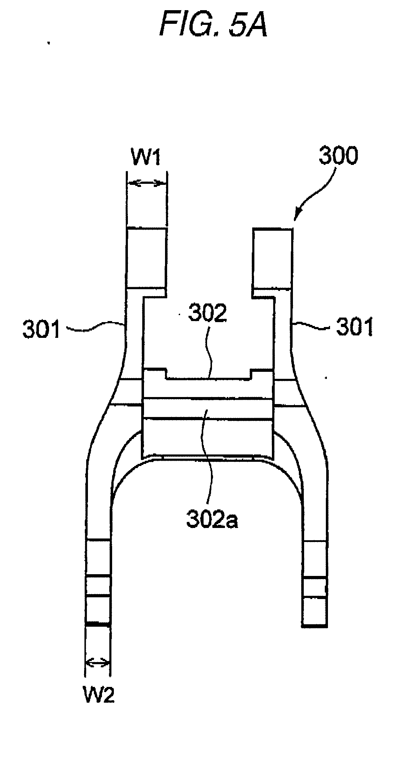

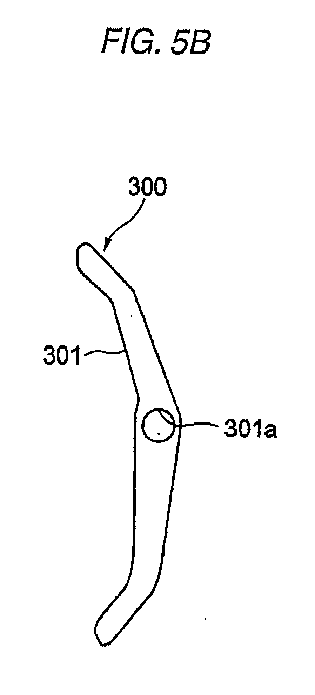

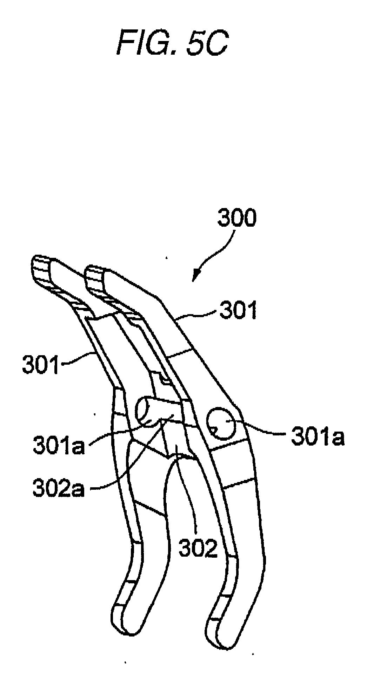

Next, a fork member 300 will be described.
As is shown in Fig. 5, the fork member 300 serves as a swing member, for example, which is made by aluminum die casting, and which is formed integrally by a pair of substantially "V" shaped arm portions 301, 301 arranged side by side and a plate-like bridge portion 302 which connects the arm portions 301, 301 at centers thereof.
Circular holes 301a, 301a are formed in vicinity of the centers of the arm portions 301, 301, and the bridge portion 302 has a groove having an arc-shaped cross section and connecting to the holes 301a, 301a. A width W1 at an upper end of each arm portion 301 is made larger than a width W2 at a lower end. A distance from the holes 301a, 301a to the upper ends of the arm portions 301, 301 and a distance to the lower end thereof can be set arbitrarily.

As is shown in Fig. 1, the fork member 300 is allowed to swing around an axis of a shaft S, which is planted in the engine case, by inserting the shaft S to the holes 301a, 301a. The groove 302a is kept in being contact with an outer circumferential surface of the shaft S. At this occurs, the upper ends of the arm portions 301, 301 are in contact with a right side surface of the pressing member 117 of the actuator 100 at both sides which cross an axial line of the pressing member 117, and the lower ends of the arm portions 301, 301 are in contact with a right side surface of the outer flange 209b of the bearing holder 209 of the drive side pulley portion 200 at sides which cross an axial line of the outer flange 209b.

Next, the operation of the continuously variable transmission will be described.
To simplify description, it will be described only for forward movement, and the description of reverse movement will be omitted here. The controller selects an optimum gear or speed ratio based on vehicle speed, engine speed, accelerator opening and the like and drives the actuator 100 based on the gear ratio selected. Since in the belt 211, a force is applied in a direction in which the movable sheave 207 moves away from the fixed sheave 203 while power is being transmitted, the fork member 300 is biased in a counterclockwise direction at all times.

Here, when the controller commands deceleration, electric power of a predetermined polarity is supplied to the motor 102, and in Fig. 2, the rotational shaft 102a rotates in a predetermined direction. The rotational force of the rotational shaft 102a is transmitted to the nut member 107 via the drive gear 103, the large gear 105a, the small gear 105b and the driven gear 106. The threaded shaft 111 is displaced rightwards as viewed in Fig. 1 in response to rotation of the nut member 107. When the threaded shaft 111 is displaced rightwards, the pressing member 117 is also displaced in the same direction. Therefore, the upper ends of the arm portions 301, 301, which are in contact with the pressing member 117, are pressed rightwards, thereby the fork member 300 swings clockwise against the biasing force of the belt 211.

Then, the lower ends of the arm portions 301, 301 press the outer flange 209b of the bearing holder 209 leftwards, therefore, the bearing holder 209 biases the movable sheave 207 leftwards via the ball bearing 208. As this occurs, although the movable sheave 20 rotates, the fork member 300 does not rotate. However, since the ball bearing 208 lies between the bearing holder 209 and the movable sheave 207, no friction or the like is generated, thereby early wear and power transmission loss can be suppressed.
By the movable sheave 207 biased via the bearing holder 209, the movable sheave 207 is displaced so as to approach the fixed sheave 203 (or so as to reduce the pulley groove width) along the sleeve 206 which rotates together with the pulley shaft 201, therefore, the belt 211 moves radially outwards while being held between the conical surface 203a and the conical surface 207b which both rotate.
On contrary, in the driven side pulley portion, not shown, which is connected to the drive side pulley portion 200 by the belt 211, the movable sheave is driven to move away from the fixed sheave. Therefore, a pulley diameter of the belt 211 in the drive side pulley portion 211 increases, a pulley diameter of the belt 211 in the driven side pulley portion decreases, thereby a rotational speed of the output shaft to a rotational speed of an input shaft is decreased, and deceleration is occurred.
The controller detects that the threaded shaft 111 has been displaced to a predetermined position based on a signal from the sensor 118, and stops a driving control of the motor. Thereby, since the position of the movable sheave 207 is fixed, the pulley diameter of the belt 211 is fixed, and a steady speed running condition is occurred.

In contrast to this, when the controller commands acceleration, electric power of an opposite polarity to that described in the case of deceleration is supplied to the motor 102, and the rotational shaft 102a rotates in an opposite direction against the case of deceleration in Fig. 2. The rotational force of the rotational shaft 102a is transmitted to the nut member 107 via the drive gear 103, the large gear 105a, the small gear 105b and the driven gear 106. The threaded shaft 111 is displaced leftwards in Fig. 1 in response to rotation of the nut member 107. When the threaded shaft 111 is displaced leftwards, the pressing member 117 is also displaced in the same direction. As has been described above, since the fork member 300 is biased counterclockwise by the rotating belt 211, the upper ends of the arm portions 301, 301 which are in contact with the pressing member 117 follow the pressing member 117 to be displaced leftwards, thereby the fork member 300 swings counterclockwise. Then, by the lower ends of the arm portions 301, 301 being displaced rightwards, the resistance of the bearing holder 209 is lost, therefore, following the biasing force of the belt 211, the movable sheave 207 is displaced rightwards (or increases the pulley groove width) to a position where such a displacement of the movable sheave 207 is blocked by the swing member 300.
As a result of the displacement of the movable sheave 207, the belt 211 moves radially inwards while being held between the conical surface 203a and the conical surface 207b which both rotates. On contrary, in the driven side pulley portion, not shown, which is connected to the drive side pulley portion 200 by the belt 211, the movable sheave is driven to approach the fixed sheave. Therefore, a pulley diameter of the belt 211 with the drive side pulley 200 decreases, whereas a pulley diameter of the belt 211 with the driven side pulley the wrap diameter of the belt 211 with the driven side pulley increases, thereby the rotational speed of the output shaft to a rotational speed of an input shaft is increased, and acceleration is occurred.

According to the first embodiment, since the threaded shaft 111 of the ball screw mechanism is disposed side by side with the pulley shaft 201 and the axial displacement of the threaded shaft 111 is converted to the axial displacement of the movable sheave 207 by the fork member 300 which swings, the inertia of the nut member 107 can be suppressed, and a high-speed control of the pulley width can be implemented easily. By the fork member 300 interposed, even though the movable sheave 207 is inclined by the biasing force of the belt 211, since the threaded shaft 111 is not inclined, a reduction in fatigue life can be suppressed.

### <Second Embodiment: Continuously Variable Transmission and Actuator>

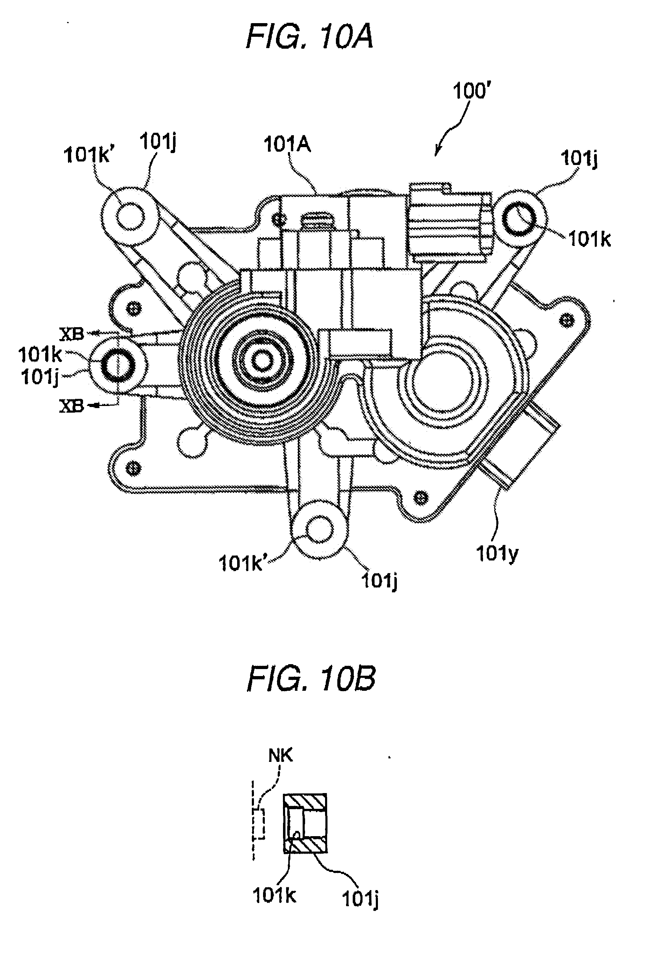

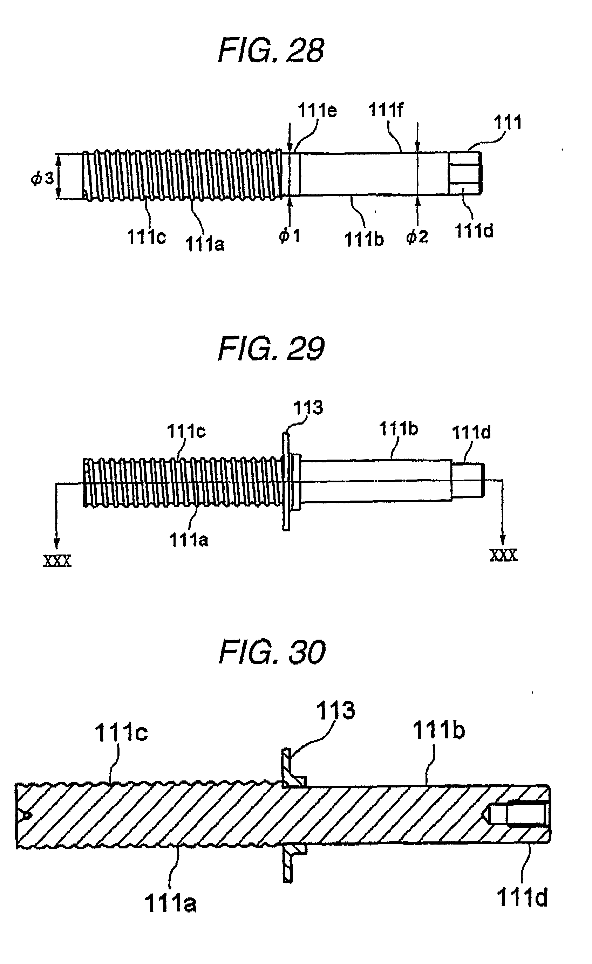

Next, a continuously variable transmission and an actuator according to a second embodiment will be described by reference to Figs. 10A to 36. Here, differences between the first embodiment and the second embodiment will mainly be described, and like reference numerals will be given to like members to those described in the first embodiment, and the description thereof will be omitted.

As is shown in Fig. 10A, a housing 101 of an actuator 100' is supported by four stays 101j which are formed integrally on a housing main body 101A and is mounted on an engine case, not shown.
When assembling the housing 101 on to the engine case, hollow knock pins NK of the engine case such as one indicated by broken lines in Fig. 10B are inserted into knock pin holes 101k which are formed in two facing stays 101j to position the housing for temporary fixing, and further bolts, not shown, is inserted into bolt holes 101k' formed in the remaining stays 101j so as to mount the housing 101 on the engine case.

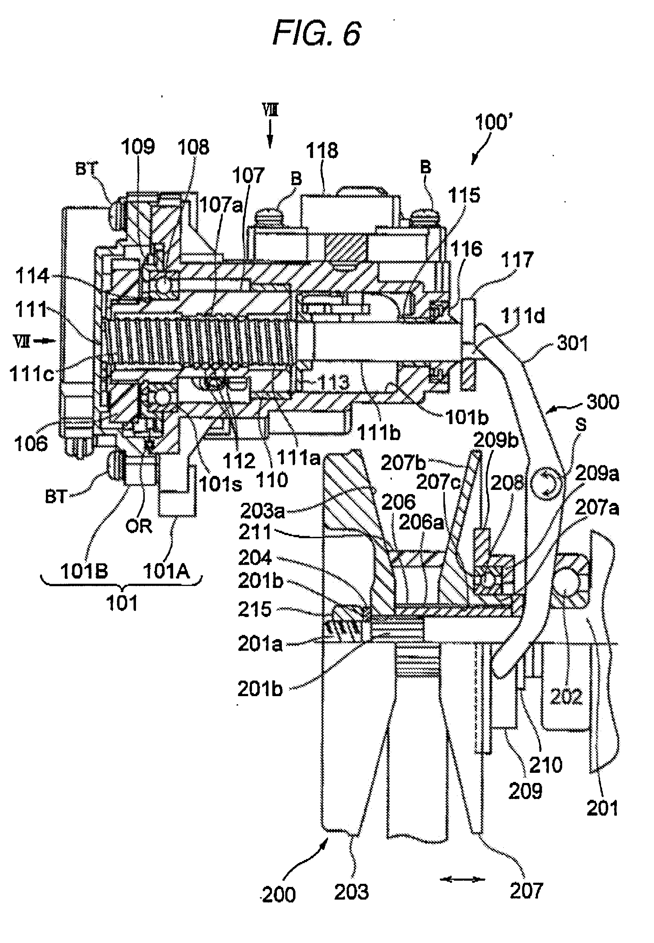

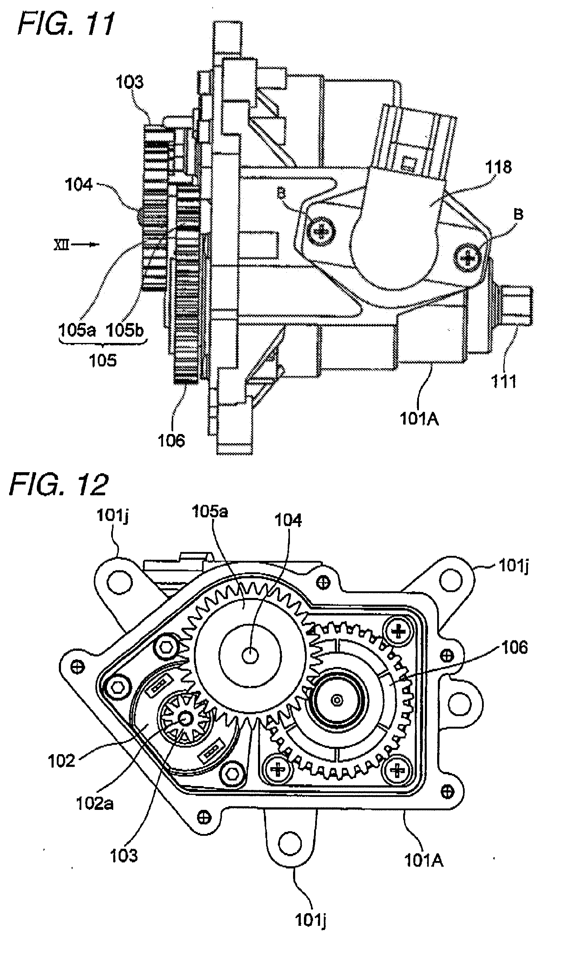

As is shown in Fig. 6, the housing 101 includes a hollow housing main body 101A which is made of aluminum and a cover member 101B which is assembled to an end face of the housing main body 101A with bolts BT.
A motor compartment 101a, which is formed into a box-like hole, and a threaded shaft compartment (a second hole) 101b, which is formed into a through hole, are formed in an interior of the housing main body 101A side by side so as not to communicate into each other. A motor (preferably, a servomotor with a brake) 102 (Fig. 12) is fixed in place within the motor compartment, which motor is controlled by an exterior controller (not shown) as will be described later.
In this embodiment, the actuator 100' is fixed to the engine case and is disposed above a drive side pulley portion 200, which will be described later, as is shown in Fig. 6. As a modified example to this configuration, the actuator 100' may be disposed inside a belt 211 between the drive side pulley portion 200 and a driven side pulley portion.

Although a threaded shaft 111 will be described in detail later, an annular (a doughnut-like disc-shaped) sensor collar 113 is press-fixed on an outer circumference of a round shaft portion 111b in vicinity of a male thread portion 111a so as to be in contact with a step portion (a land portion) of the male thread portion 111a. The round shaft portion 111b is supported on an inner circumference of an end portion of the housing main body 101A by a bush 115 so as to move in an axial direction. A gap or space between the housing main body 101A and the round shaft portion 111b is sealed by a seal 116 which is disposed axially outwards of the bush 115 so as to lie adjacently thereto. Two flat portions are formed on an outer circumference of an end portion 111d of the threaded shaft 111 which projects from the housing main body 101A, and a pressing member 117 (whose lower half portion only is shown as sectioned in Fig. 6) having a doughnut-like plate shape is fitted on the end portion 111d of the threaded shaft 111 so as not to rotate relatively. The pressing member 117 has two flat portions which correspond to the two flat portions at the end portion 111d of the threaded shaft 111.

A sensor 118 is mounted on the housing main body 101A.
How to mount the sensor 118 will be described later.

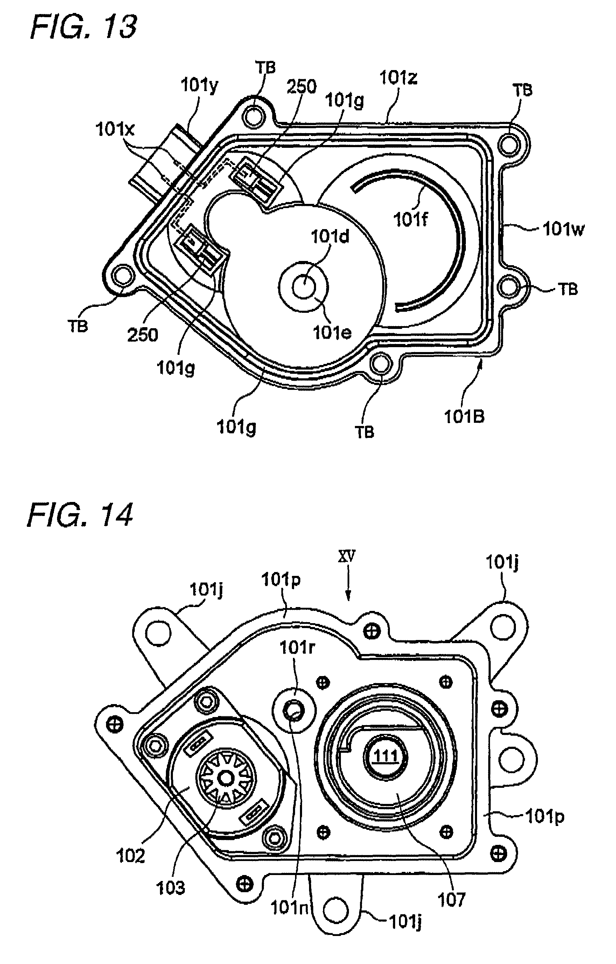

As is partially indicated by dotted lines in Fig. 13, the cover member 101B is formed by insert molding coupling members 101x, 101x which are made by bending narrow elongated metallic plate materials into a resin cover member main body 101z.
An O ring groove 101q is formed around a circumference of an end face of the cover member main body 101z so as to surround it, and five metallic tubes TB are insert molded into a portion of the cover member 101B which projects from the O ring groove 101q, so that the cover member 101B is mounted on the housing 101A with bolts (not shown) which are inserted into the tubes TB.
In addition, a cover portion 101w is formed on an outermost circumference of the cover member main body 101z so as to project into a thin plate-like shape in a vertical direction with respect to a surface of a piece of paper on which Fig. 13 is drawn from the end face. When the cover member 101B is assembled on to the housing main body 101A, the cover portion 101w surrounds the end face of the housing main body 101A, thereby a sealing effect of a joining surface is enhanced.

An outer end portion of the coupling member 101x is insert molded so as to project into an angular tube-shaped coupling portion 101y which is formed on the cover member main body 101z.

In Fig. 13, a relief portion (a recess) 101d for a supporting shaft 104 which supports a gear 105 and an annular stopper portion (a projection) 101e for preventing an axial movement of the gear 105 (Fig. 11) are formed integrally at a bottom portion of an accommodating portion for the gear 105 in the cover member main body 101z. A bow-like stopper portion (a projection) 101f for preventing an axial movement of a gear 106 is formed integrally at a bottom portion of an accommodating portion for the gear 106 (Fig. 11) in the cover member 101B.

Receiving portions 101g, 101g for intermediate terminals 250, which are each made of a metallic plate, are formed into an angular box-like hole in the cover member main body 101z. A dimension of each of the receiving portions 101g, 101g at an entrance thereto is made smaller than a dimension at a deeper portion, so that when the intermediate terminal 250 is mounted on the receiving portion 101g, the intermediate terminal 250 is prevented from falling therefrom.

An inner end portion of each of the coupling members 101x is insert molded so as to project into the receiving portion 101g in the cover portion main body 101z, so as to electrically connect with the intermediate terminal 250 which is inserted into the receiving portion 101g.

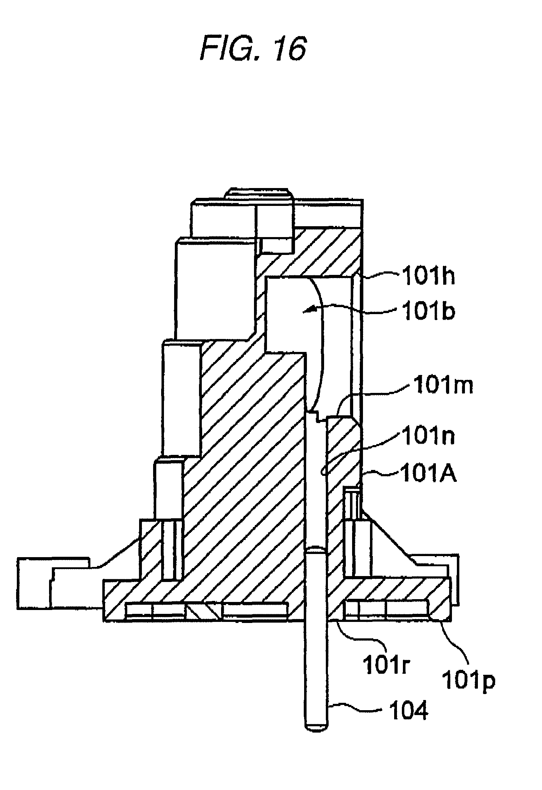

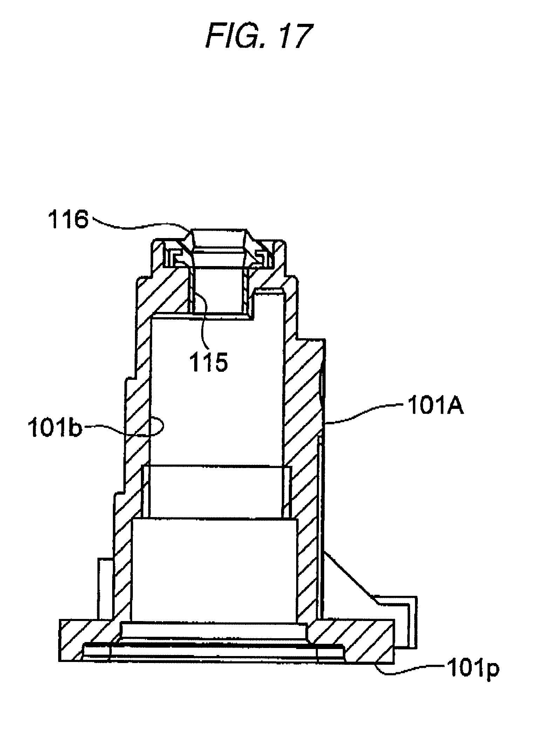

In Fig. 16, a first hole 101n having a cylindrical shape is formed parallel to the threaded shaft 111 in an end face of the housing main body 101A so as to communicate into a third hole 101m which intersects the threaded shaft compartment (the second hole) 101b.
The supporting shaft 104 is press fitted in the first hole 101n. The first hole 101n, whose entrance is chamfered, is finished with good accuracy by machining on a fitting range of the supporting shaft 104 only. However, when the supporting shaft 104 is press fitted in the first hole 101n, there is caused a fear that a minute gap is produced between the threaded shaft compartment 101b and the first hole 101n. However an entrance side of the first hole 101n is sealed by the cover member 101B and an 0 ring OR, even though such a gap is produced, there is no such case in which dirt is sucked into an interior of the first hole 101n.
A gap or space between a right end, as viewed in Fig. 6, of the threaded shaft compartment 101b and the threaded shaft 111 is sealed by the seal 116 (refer to Fig. 17). Also, a left end, as viewed in Fig. 6, of the threaded compartment 101b is sealed by the cover member 101B and the 0 ring OR. Therefore, there is no such case in which dirt is sucked into the threaded shaft compartment 101b from the gap.

As is shown in Fig. 16, at the end face of the housing main body 101A, a cylindrical outer circumferential portion 101r which surrounds a circumference of the first hole 101n is located in the same position or is level with a portion (an contact portion) 101p on a circumference of the end face of the housing main body 101A which constitutes a seal surface by the O ring fitted in the groove 101q when the O ring is in contact with the cover member 101B in axial direction. By this configuration, both the contact portion 101p and the outer circumferential portion 101r can be machined at the same time through single machining by use of the same relatively large tool, thereby machining efficiency is enhanced.

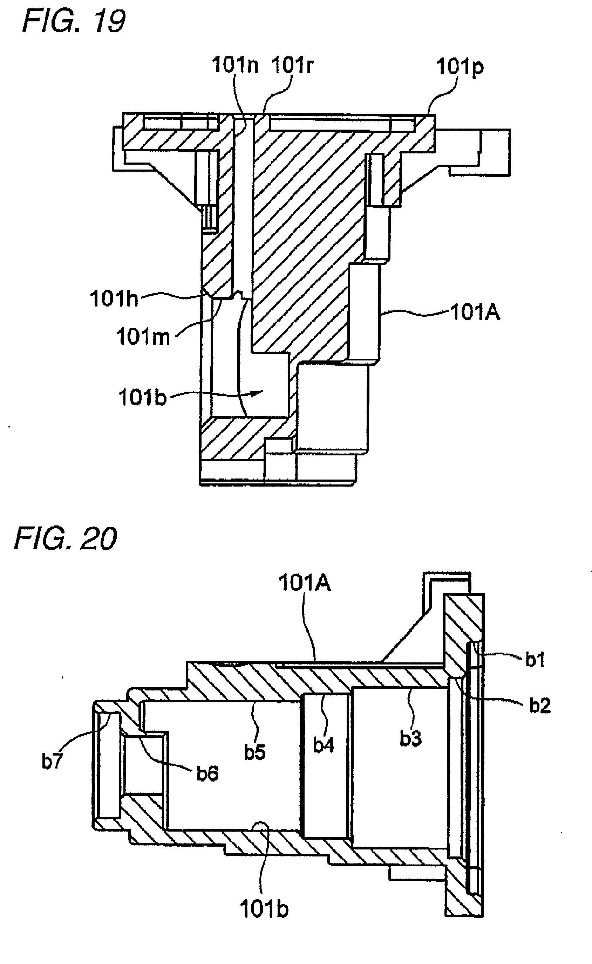

In Fig. 20, in the threaded shaft compartment 101b, a first inside diameter portion b1 where a bearing holder 109 is to be assembled, a second inside diameter portion b2 in which a ball bearing 108 is to be fitted, a third inside diameter portion b3 which is to encompass a nut member 107, a fourth inside diameter portion b4 in which a bush 110 is to be fitted, a fifth inside diameter portion b5 which is to encompass an arm portion of the sensor 118 and a sixth inside diameter portion b6 in which the bush 115 is to be fitted are formed sequentially in that order in a step-like fashion from the cover member 101B side (from a right-hand side in Fig. 20), and inside diameters of the inside diameter portions become smaller in that order. A mounting portion b7 where the seal 116 is to be mounted is formed adjacent to the sixth inside diameter portion b6, and this mounting portion b7 has a larger diameter than that of the sixth inside diameter portion b6.

As has been described above, the threaded shaft 111 has the configuration in which the male thread portion 111a, the round shaft portion 111b and the end portion 111d on the round shaft portion 111b side are directly coupled together in that order. A portion of the round shaft portion 111b near the male thread portion 111a is a fitting portion 111e on which the sensor collar 113 is to be fitted, and a portion of the round shaft portion 111b which is the end portion 111d is a fitting portion (a sliding portion) 111f on which the bush 115 is to be fitted (Fig. 6). Here, an outside diameter φ1. of the fitting portion 111e for the sensor collar 113 and an outside diameter φ2 of the fitting portion for the bush 115 are made smaller than a groove root diameter φ3 of the male thread groove 111c of the threaded shaft 111 (φ1, φ2<φ3). By adopting this configuration, the sensor collar 113 can be fitted on the fitting portion 111e in an ensured fashion, and the bush 115 is allowed to slide smoothly relative to the fitting portion 111f.

When manufacturing threaded shafts 111, male thread grooves 111c are formed at a plurality of portions by rolling machining a single round rod, and then, the single round rod is cut to a required dimension, thereby a plurality of threaded shaft materials are manufactured from the single round rod. For example, the length of the threaded shaft 111 that the actuator 100' according to the second embodiment requires is on the order of 100 mm, and by rolling machining a round shaft of the order of 1 m, about 9 threaded shaft materials which can actually be used can be obtained.
Next, the threaded shaft material is cut to form a fitting portion 111e for the sensor collar 113 and a fitting portion 111f for the bush 115, and then, a heat treatment is applied to the threaded shaft material, and finally, the threaded rod is ground to enhance machining accuracy.
By making the fitting portion 111e for the sensor collar 113 and the fitting portion 111f for the bush 115 smaller in diameter than the groove root diameter of the male thread groove 111c, a round shaft portion with a uniform diameter can be formed without leaving the male thread portion 111a produced by rolling machining. In a case that the sensor collar 113 has been press fitted on the fitting portion 111e, and then, the sensor collar 113 impinges on a step portion (a protruding land portion) of the male thread portion 111a of the threaded shaft 111, the sensor collar 113 can be supported by the step portion to reduce the possibility that the sensor collar 113 falls.
In a case that an outside diameter φ1 of the fitting portion 111e for the sensor collar 113 is made larger than an outside diameter φ2 of the fitting portion 111f for the bush 115, a risk of the fitting portion 111f for the bush 115 being damaged is reduced when the sensor collar 113 is press fitted on the fitting portion 111e from the end portion 111d. Referring to Fig. 6, since in the event that the sensor collar 113 is in contact with the nut member 107 when the threaded shaft 111 is the most deeply drawn into the housing main body 101A, there is a fear that the sensor collar 113 is tightened so hard to be locked by the threaded shaft 111 and the nut member 107, it is preferable that the sensor collar 113 is made not to be in contact with the nut member 107 even when the threaded shaft 111 is the most deeply drawn into the housing main body 101A. In this embodiment, the threaded shaft 111 is in contact with the resin cover 101B before the sensor collar 113 is in contact with the nut member 107.

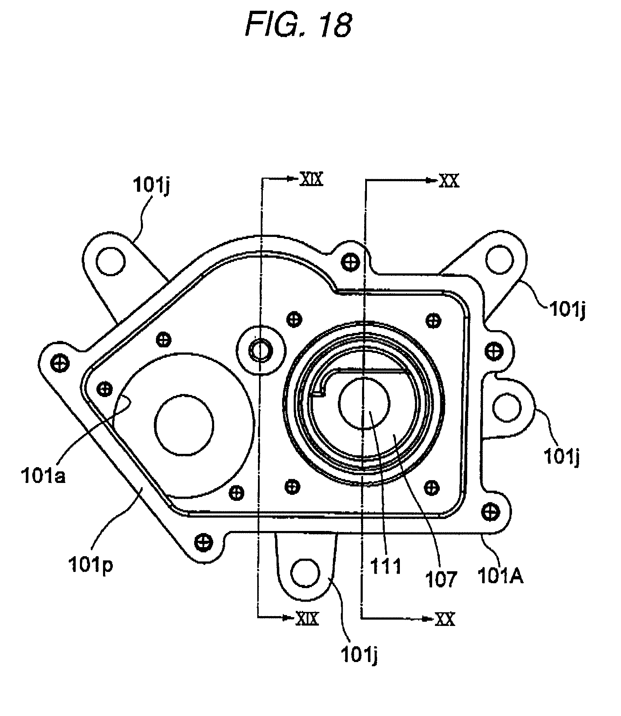

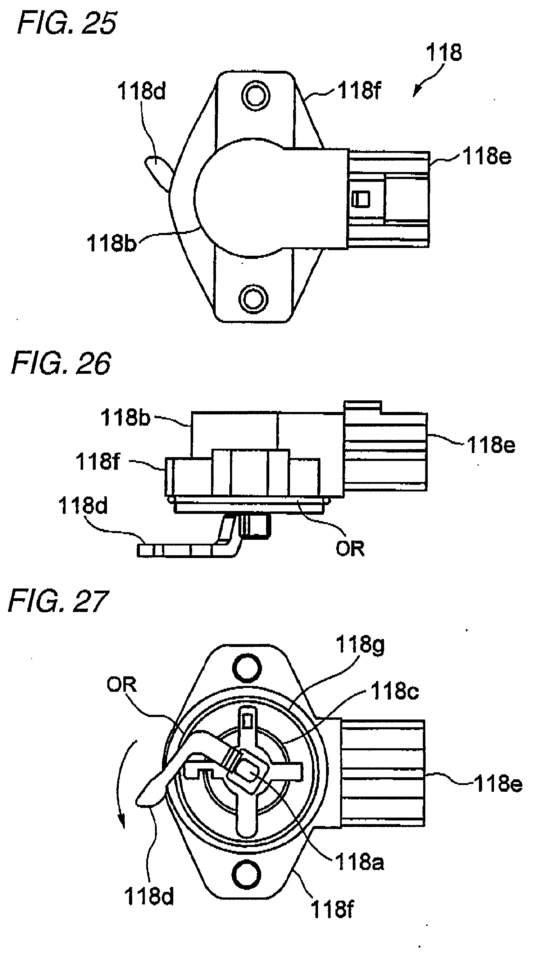

As is shown in Figs. 25 to 27, the sensor 118 is made up of a sensor main body 118b having a sensor shaft 118a which is coupled to a potentiometer, not shown, a coil spring 118c which biases the sensor shaft 118a in a predetermined direction (a direction indicated by an arrow in Fig. 27), a V-shaped arm portion 118d mounted at a distal end of the sensor shaft 118a, and a connector portion 118e for transmitting a signal from the sensor main body 118b to the outside. The sensor main body 118b has a flange portion 118f and a cylindrical spigot portion 118g which is adjacent to the flange portion 118f and is coaxial with the sensor shaft 118a. The sensor 118 is a rotary potentiometer or a rotary encoder, for example, and is such as to output a signal in accordance with a rotating angle of the sensor shaft 118a. The sensor 118 is known so well that the description thereof will be omitted here. Although it is obvious from Fig. 18, the arm portion 118d projects radially outwards from an outside diameter of the spigot portion 118g.

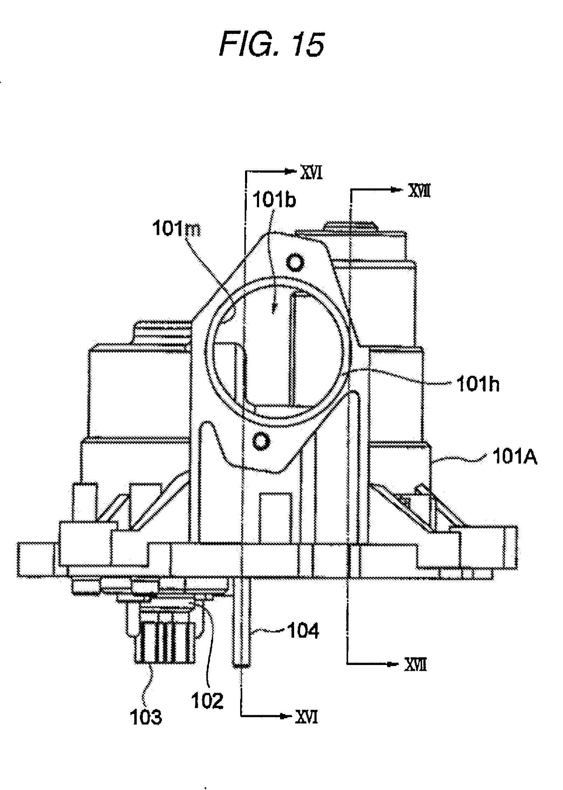

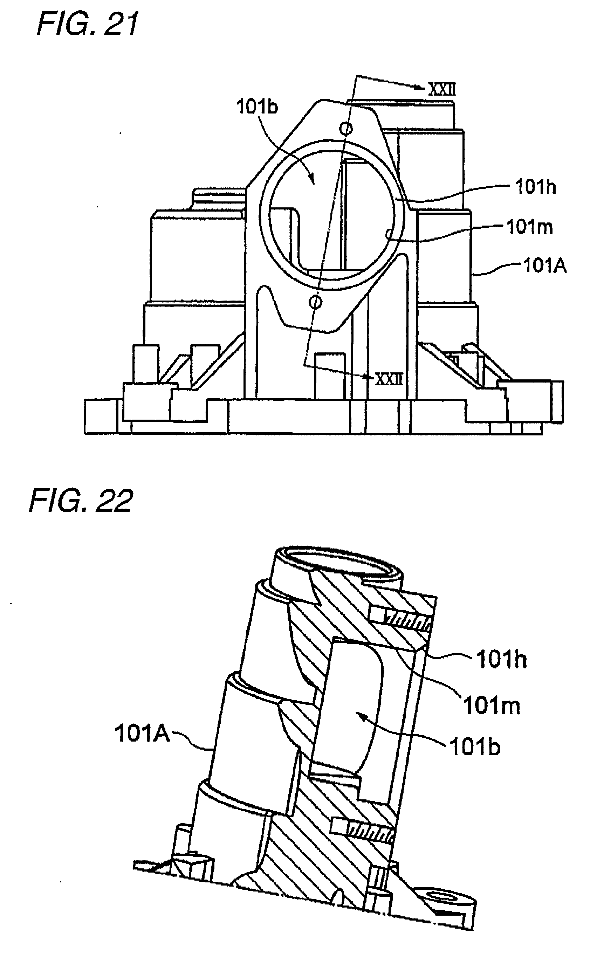

As is shown in Figs. 15, 22, a third hole 101m is formed in the housing main body 101A, the third hole which extends in a direction which is at right angles to an axis of the threaded shaft compartment 101b and communicates with the threaded shaft compartment 101b. The third hole 101m has the same diameter as that of the spigot portion 118g of the sensor 118.

When the sensor 118 is mounted in the third hole 101m in the housing main body 101A, the sensor 118 is inserted in such a state that an O ring OR is fitted on the outside diameter of the spigot portion 118g. As this occurs, in the event that the spigot portion 118g is oriented in a vertical direction relative to the housing main body101A, there may be a possibility that the O ring OR falls. However, by the sensor 118 being inclined, the O ring OR is caught on the spigot portion 118g, thereby the fall of the O ring OR is suppressed when the sensor 118 is mounted.
Since the arm portion 118d is biased in one direction at all times by the coil spring 118c lying in an interior of the sensor main body 118b, the arm portion 118d may project than the spigot portion 118g only when the sensor 118 is mounted in a state that sensor 118 is free. Namely, it means that in the event that the sensor arm portion 118d rotates aroung the sensor shaft 118a when the sensor is in operation, there may be a case where at least a distal end of the sensor arm portion 118d is positioned further radially inwards than the outside diameter of the spigot portion 118g.

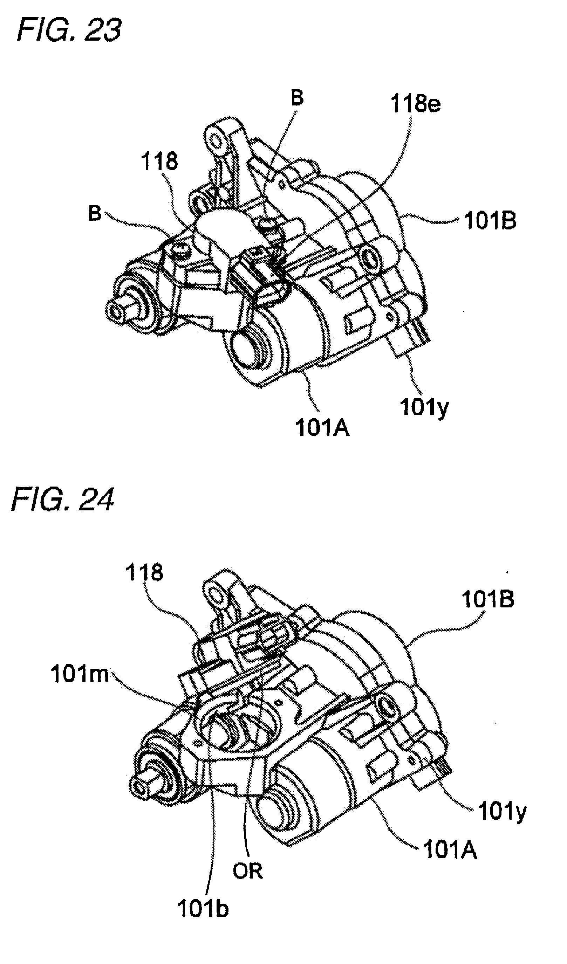

An assembling procedure of the sensor 118 will be described in more detail.
Firstly, with the sensor 118 in which the O ring OR is assembled on to the spigot portion 118g inclined, the projected sensor 118 is inserted into the third hole 101m from the arm portion 118d. When the arm portion 118d enters the threaded shaft compartment 101b, the axes of the third hole 101m and the spigot portion 118g are made to coincide with each other, and the sensor 118 is pushed into the third hole 101m completely. As this occurs, the O ring OR is in contact with a tapered chamfered portion 101h formed around a circumference of the third hole 101m in the housing main body 101A and is elastically deformed so as to be collapsed between the flange portion 118f and the chamfered portion 101h. Therefore, sealing is implemented effectively. In this state, by inserting machine screws B into screw holes in the flange portion 101f so as to be screwed into screw holes in the housing main body 101A, the assemblage of the sensor 118 can be implemented.
In such a state that the sensor 118 is assembled, as is shown in Fig. 23, since the connector portion 118e of the sensor 118 is oriented to the same side as a connector coupling portion 101y of the cover member 101B, connectors, not shown, can individually be inserted from the same side, facilitating wiring.

In such a state that the sensor 118 is assembled, the arm portion 118d is in contact with the sensor collar 113 which is fitted on the threaded shaft 111 at the distal end thereof, thereby the sensor collar 113 is normally pressed leftwards (towards the step portion of the male thread portion 111a) by an elastic force of the coil spring 118c. Namely, the arm portion 118d normally biases the sensor collar 113 which is press fitted on the threaded shaft 111 in a direction in which the dislocation thereof is prevented.
In this way, the sensor collar 113 which is fitted on the threaded shaft 111 is pressed in the direction in which the dislocation of the sensor collar 113 is prevented by utilizing the spring force of the coil spring 118c which is exerted on the arm portion 118d of the sensor 118, thereby a reduction in measuring accuracy of the sensor 118 by the sensor collar 113 deviating from the threaded shaft 111 can be suppressed. When the sensor collar 113 is made up of a short cylindrical portion which fits on the threaded shaft 111 and a flange portion which extends radially from the short cylindrical portion and the distal end of the arm portion 118d is in contact with an intersecting portion therebetween, holding of the arm portion 118d is ensured.

In Fig. 6, when the threaded shaft 111 is displaced rightwards in the axial direction, the sensor arm 118d is pushed by the sensor collar 113, and the threaded shaft 118a rotates. The potentiometer within the sensor main body 118b generates a corresponding signal in accordance with the rotating amount of the threaded shaft 118a. An exterior controller (not shown) which receives the signal via the connector portion 118e measures an axial displacement of the threaded shaft 111 based on the signal outputted by the sensor 118.
On the other hand; the arm portion 118d is biased in a direction in which the sensor collar 113 is pressed by the coil spring 118c provided in the interior of the sensor 118. Because of this, when the threaded shaft 111 is displaced in an opposite direction (leftwards in the axial direction in Fig. 6), the arm portion 118d also follows the displacement of the arm portion 118d, thereby the potentiometer within the sensor main body 118b generates a corresponding signal in accordance with the rotating amount of the sensor shaft 118a.

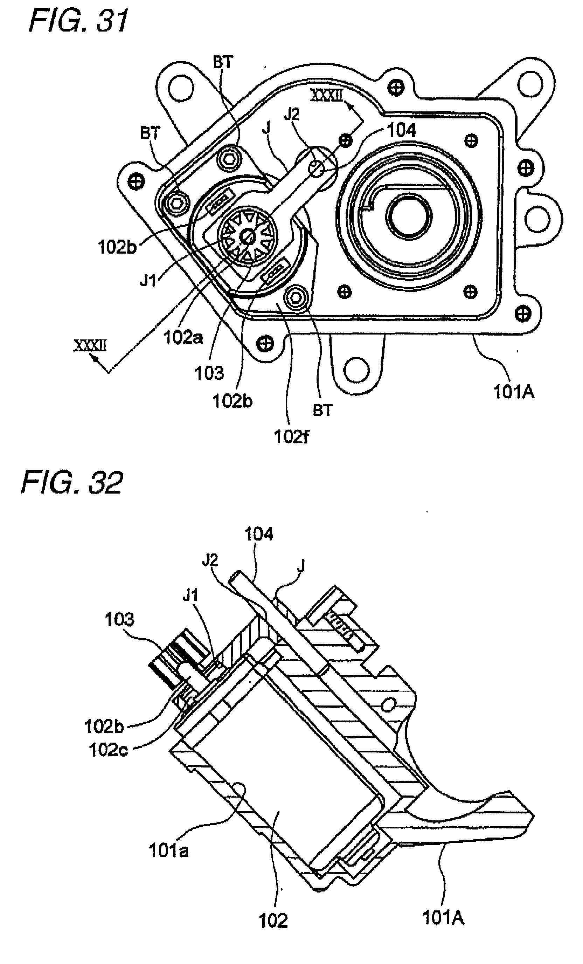

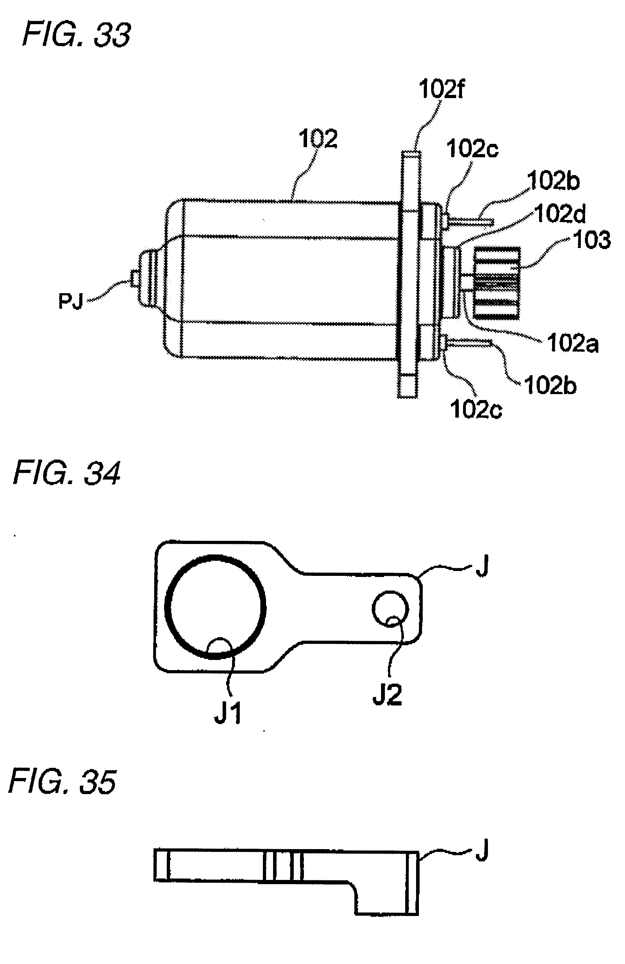

As is shown in Figs. 32, 33, the motor 102 has two metallic flat plate-shaped terminals 102b, 102b which project therefrom, and the two terminals 102b, 102b are arranged 180 degrees in phase apart from each other so as to hold a rotating shaft 102 therebetween. Distal ends of the terminals 102b, 102b have an arc-like shape, and resin bosses 102c, 102c are formed individually at roots of the terminals 102b, 102b. The bosses 102c, 102c have a function to prevent short circuit even though there is caused a variation in dimensions due to manufacturing errors when the terminals 102b are assembled into the intermediate terminals 250, which will be described later. Further, the motor 102 has a cylindrical portion 102d which is formed at a root of the rotating shaft 102 and which is coaxial with the rotating shaft 102a and a flange portion 102f which extends from the motor 102 in a direction which is at right angles to an axis of the motor 102. An outside diameter of the cylindrical portion 102d is made larger than an outside diameter of a drive gear 103.

As is shown in Figs. 34, 35, a jig J has a large hole J1 which has an inside diameter which is larger than the outside diameter of the drive gear 103 and is equal to the outside diameter of the cylindrical portion 102d and a small hole J2 whose inside diameter is equal to an outside diameter of the supporting shaft 104. It is preferable that a thickness of a portion where the small hold J2 is provided is thicker than a thickness of a portion where the large hole J1 A center-to-center distance between the large hole J1 and the small hole J2 is equal to a center-to-center distance between the drive gear 103 and the gear 105.

When the motor 102 is mounted in the housing main body 101A, bolts BT are inserted in through holes (not shown) which are opened in the flange portion 102f of the motor and are then screwed into screw holes opened in the housing main body 101A, so that the motor 102 is fixed to the housing main body 101A.
As this occurs, in order to adjust load and wear of the gears optimally, the motor 102 needs to be positioned so that the center-to-center distance between the drive gear 103 mounted on the rotating shaft 102a of the motor 102 and the gear 105 which meshes with the drive gear 103 (Figs. 11, 12) becomes a predetermined dimension.

Here, the positioning of the motor 102 will be described.
The motor 102, with the drive gear 103 press fitted on the rotating shaft 102a, is inserted into the motor compartment 101a of the housing 101A as shown in Fig. 12. Since there is a gap between the motor compartment 101a and the motor 102 in that state, the motor 102 needs to be positioned. Then, in the second embodiment, the supporting shaft 104 is used for positioning the motor 102.

More specifically, the small hole J2 in the jig J is fitted on the supporting shaft 104 and the large hole J1 is passed through the outside diameter of the drive gear 103 so as to be fitted on the cylindrical portion 102d (Figs. 31, 32). This allows the center-to-center distance of the supporting shaft 104 which supports the drive gear 103 and the gear 105 to take an appropriate value. In this state, by mounting the flange portion 102f of the motor 102 on the housing main body 101A using bolts BT, the positioning of the motor 102 is completed. Thereafter, the jig J is removed, and the gear 105 is assembled in place.

According to the second embodiment, the supporting shaft 104 is press fitted and fixed to the housing main body 101A before the motor 102 is mounted on the housing main body 101A and thereafter, the motor 102 can be positioned with good accuracy relative to the housing main body 101A based on the supporting shaft 104 by use of the jig J which has been worked so that the center-to-center distance between the supporting shaft 104 and the rotating shaft 102a of the motor 102 takes a predetermined value.
Because of this, a trip diameter of the drive gear 103 is made smaller than the flange portion 102f in which a bearing (not shown) for supporting the rotating shaft 102a is placed. Further, being different from the other gears 105, 106 which are made of a resin, the drive gear 103 is, for example, an iron-based sintered component and is press fitted on the rotating shaft 102a of the motor 102. Accordingly, although an axial force is exerted when the drive gear 103 is press fitted on the rotating shaft 102a of the motor 102, the rotating shaft 102a projects from a rear end face of a motor case as shown in Fig. 33, and the axial force exerted when the drive gear 103 is press fitted can be supported by this projecting portion PJ.

In this way, when the cover member 101B shown in Fig. 13 is assembled to the housing main body 101A in which the motor 102 has been assembled, the terminals 102b, 102b of the motor enter interiors of engagement portions (female terminal portions) of the intermediate terminals 250, thereby electric connection is implemented. Namely, only by assembling the cover member 101B on to the housing main body 101A, wiring from the motor 102 to the coupling members 101x can be implemented.

Since a drive side pulley portion 200 and a fork member 300 of the continuously variable transmission are similar to those described in the first embodiment by reference to Figs. 1, 5, the description thereof will be omitted. Since the operation of the continuously variable transmission is the same as that of the first embodiment, the description thereof will be omitted here.

According to the second embodiment, communication is established from the first hole 101n to the third hole 101m, the first hole 101n is sealed by the cover member 101B and the O ring OR, the threaded shaft compartment 101b which serves as the second hole is sealed by the seal 116, the cover member 101B and the 0 ring OR, and the third hole 101m is sealed by the sensor 118. Consequently, since the threaded shaft compartment 101b is sealed so as to produce a closed space, infiltration of foreign matters from the outside through the first hole 101m is suppressed irrespective of machining accuracies of the first hole 101n and the supporting shaft 104.

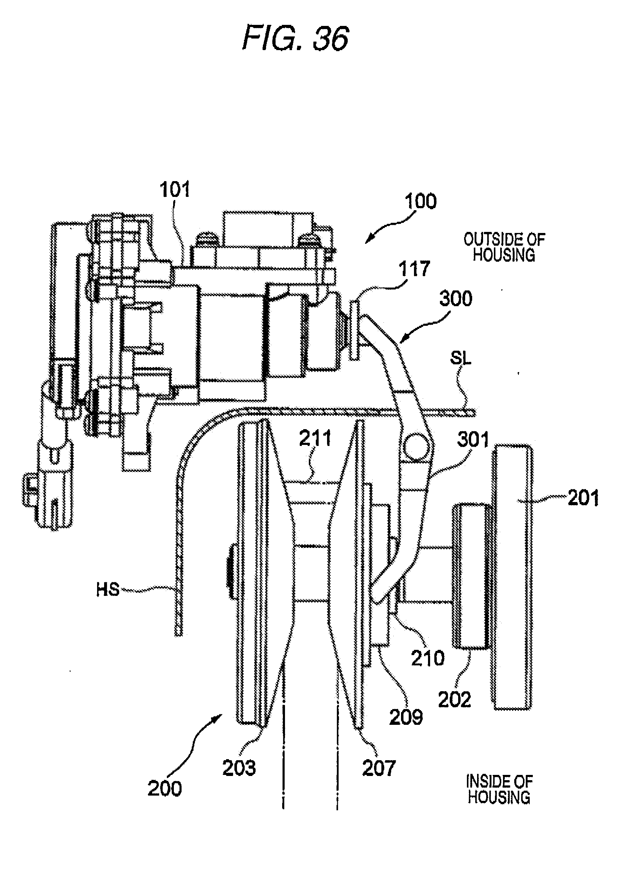

Fig. 36 is a diagram showing a state in which the continuously variable transmission according to the second embodiment is mounted actually. In Fig. 36, the continuously variable transmission which includes the drive pulley portion 200 is covered by a housing HS which is made up of a plate material. On contrary, the actuator 100' is provided in the outside of the housing HS. The housing HS has an opening SL (preferably, made up of two slits). The fork member 300 passes through the opening SL to extend both inside and outside the housing HS. As has been described before, upper ends of arm portions 301, 301 are in contact with a right side surface of the pressing member 117 of the actuator 100', whereas lower ends of the arm portions 301, 301 are in contact with a right side surface of an outer flange 209b of a bearing holder 209 of the drive side pulley portion 200. Even though the fork member 300 swings when the actuator 100' is driven, there is no such case that the fork member interferes with the housing HS.

Here, when the actuator is accommodated in an interior of the housing together with the continuously variable transmission, the performance of the motor due to heat received from the engine is easily reduced, and there is a fear that heat generated from the motor as a result of operation thereof cannot be diffused sufficiently. Further, dust or the like tends to easily infiltrate into an interior of the actuator, and in order to avoid the effect of dust that has infiltrated on the ball screw mechanism and the sensor, a strong and rigid dust protection seal has to be provided, leading to a fear that production costs are increased.
In contrast to this, as in the second embodiment, when the actuator 100' is disposed outside the housing HS, the problem with heat can be mitigated and a simple dust protection seal suffices, thereby production costs are further reduced.

### <Third Embodiment: Continuously Variable Transmission>

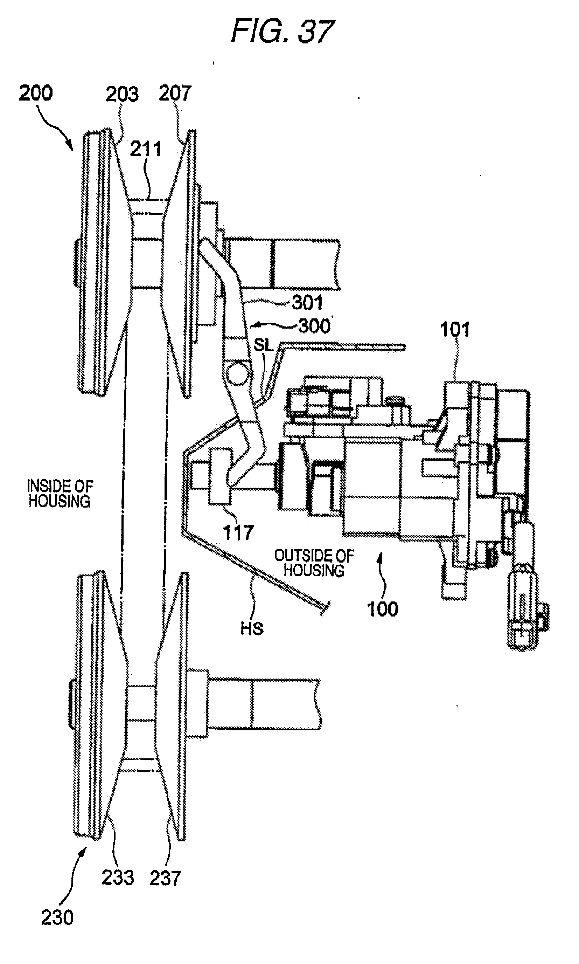

Fig. 37 is a diagram showing a state in which a continuously variable transmission according to a third embodiment is mounted actually.
The continuously variable transmission shown in Fig. 37 has a drive pulley portion 200 which includes a fixed sheave 203 and a movable sheave 207 and a driven pulley portion 230 which includes a fixed sheave 233 and a movable sheave 237, and the drive pulley portion 200 and the driven pulley portion 230, whose axes are made parallel to each other, are connected by a belt 211 and hence rotate synchronously. An actuator 100", which has the same configuration as those of the first and second embodiments that have been described above, is disposed between the drive pulley portion 200 and the driven pulley portion 230 as viewed in a direction which is at right angles to an axis of the drive pulley portion 200. Since the configuration of the continuously variable transmission is basically the same as those of the aforesaid embodiments except for the arrangement of the actuator 100", no detailed description will be made here. When the actuator 100" is disposed in the space between the drive pulley portion 200 and the driven pulley portion 230 as in this embodiment, an axial length of the continuously variable transmission can be made short, thereby making it possible to provide a compact continuously variable transmission.

Thus, while the invention has been described by reference to the first, second and third embodiments, the invention should not be construed as being limited to those embodiments, and hence, alterations and improvements can be made as required. For example, the threaded shaft may serve as a rotational element, while the nut member may serves as an axially displaceable element.

### <Fourth Embodiment: Actuator and Intermediate Terminal>

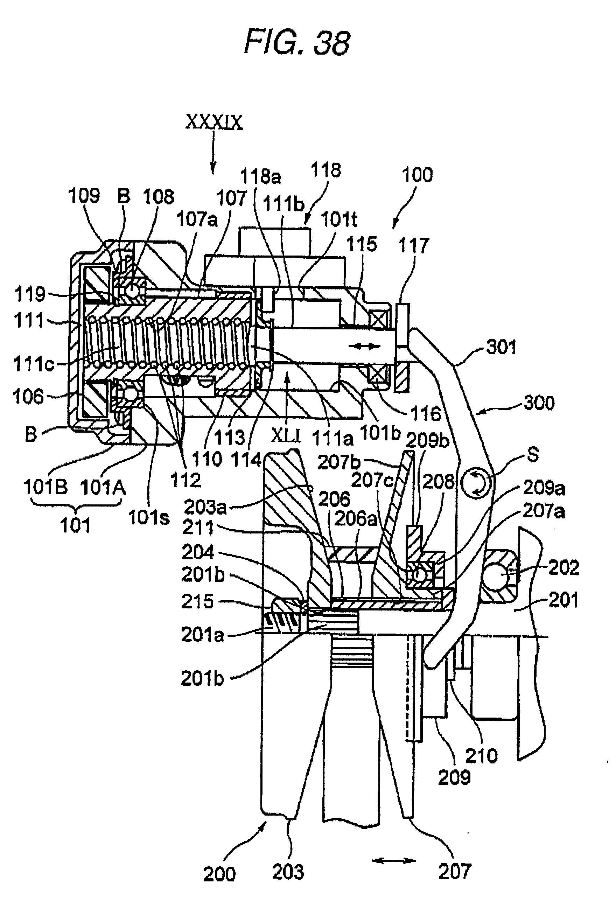

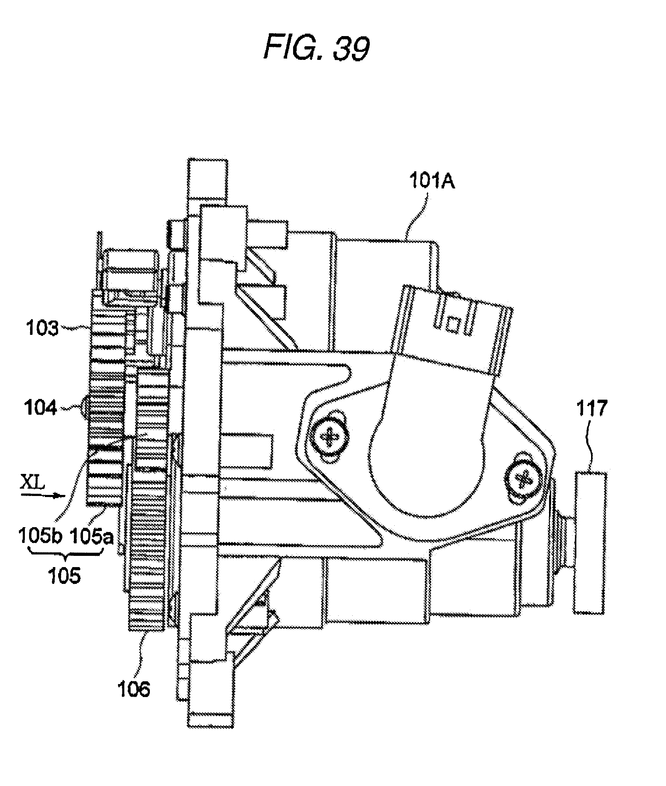

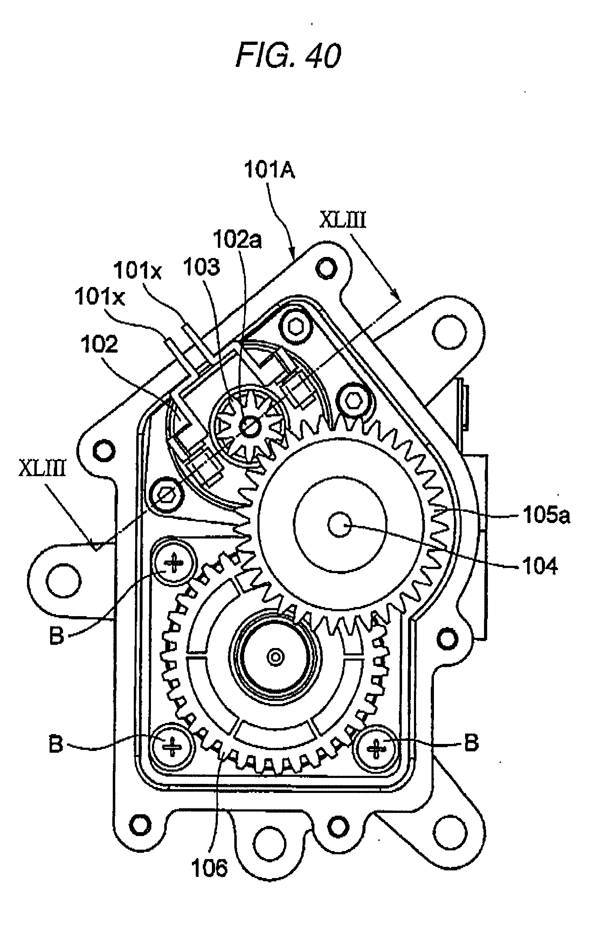

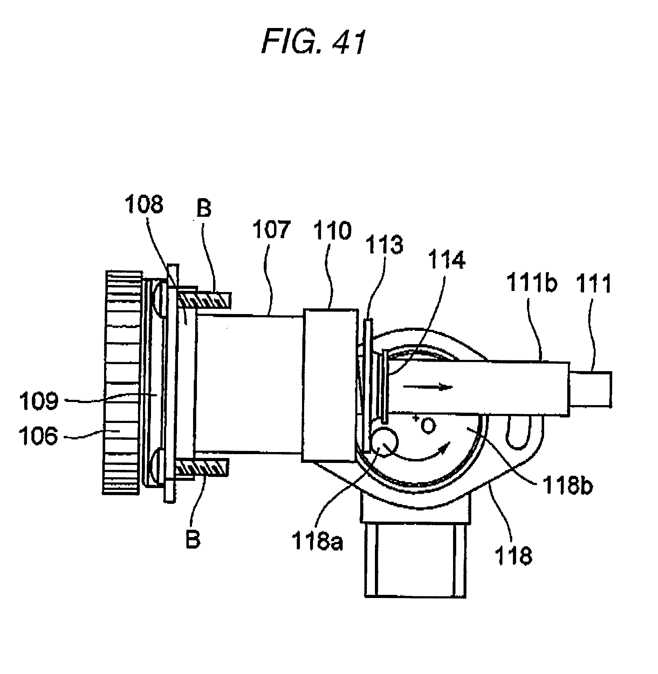

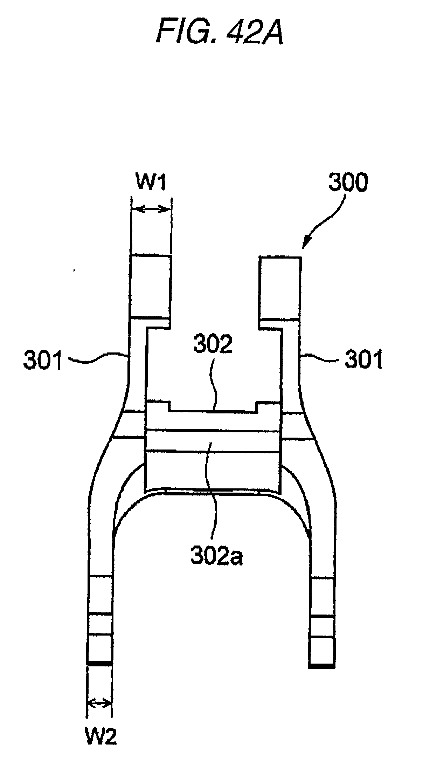

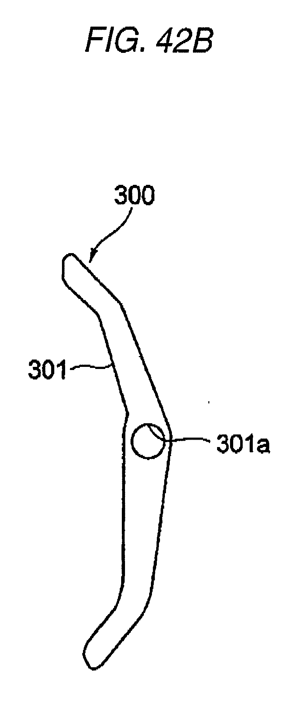

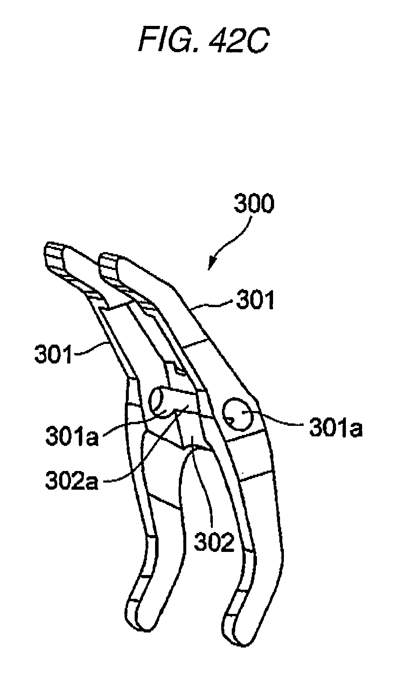

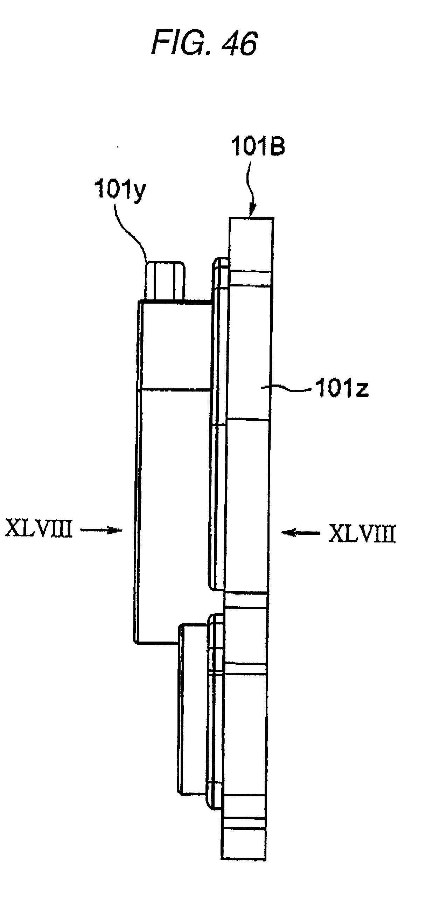

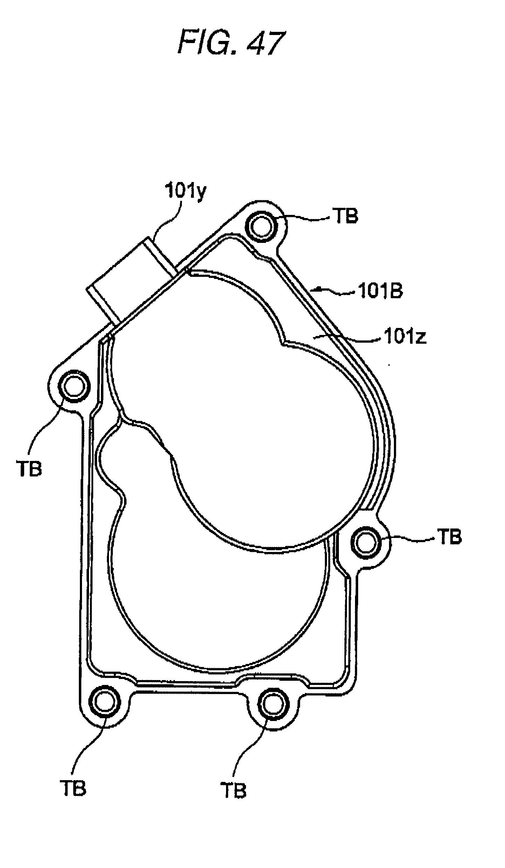

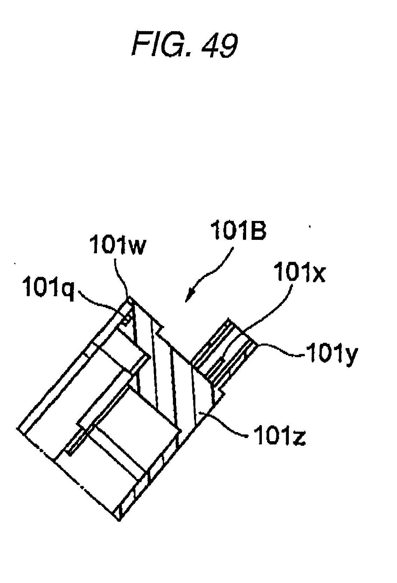

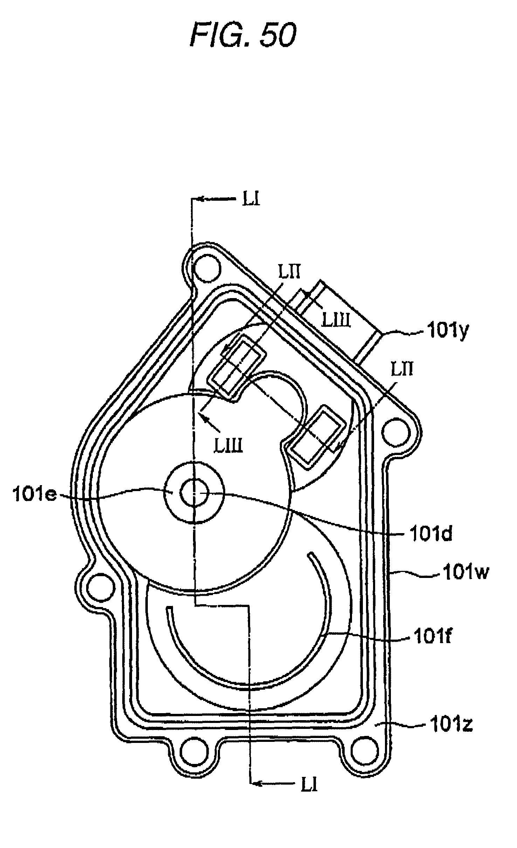

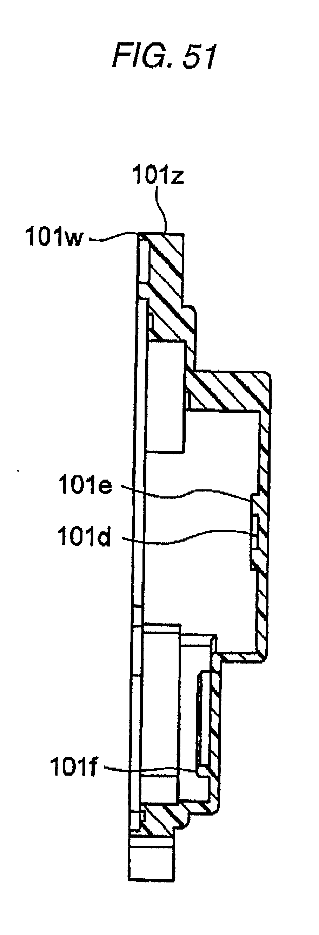

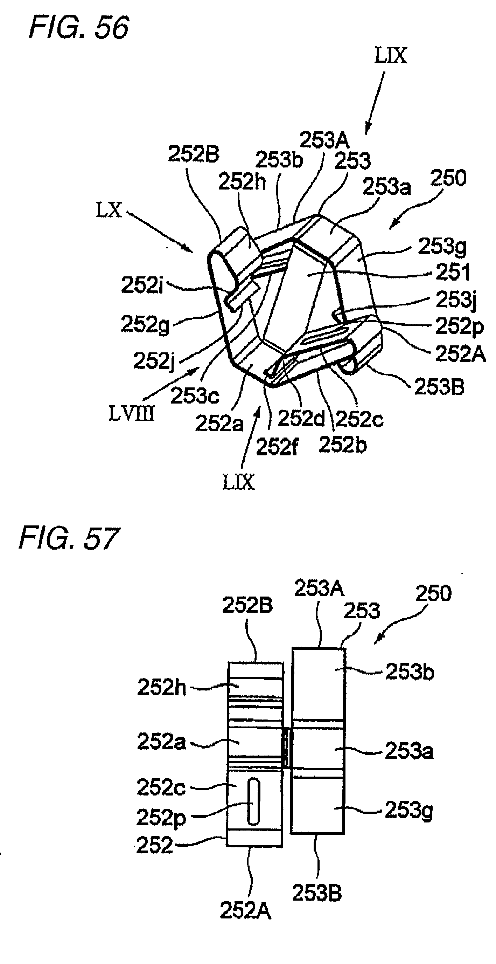

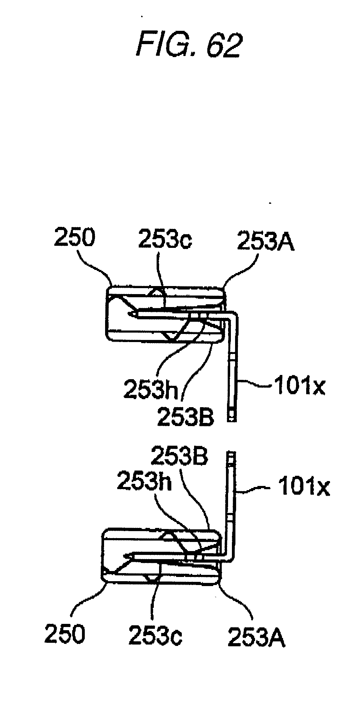

Next, an actuator and an intermediate terminal according to a fourth embodiment will be described by reference to Figs. 38 to 63. The actuator according to the fourth embodiment is almost similar to the actuators according to the first, second and third embodiments. Here, only different features from the aforesaid embodiments will mainly be described, and like reference numerals will be given to like members to those described in the first to third embodiments, the detailed description thereof being omitted.

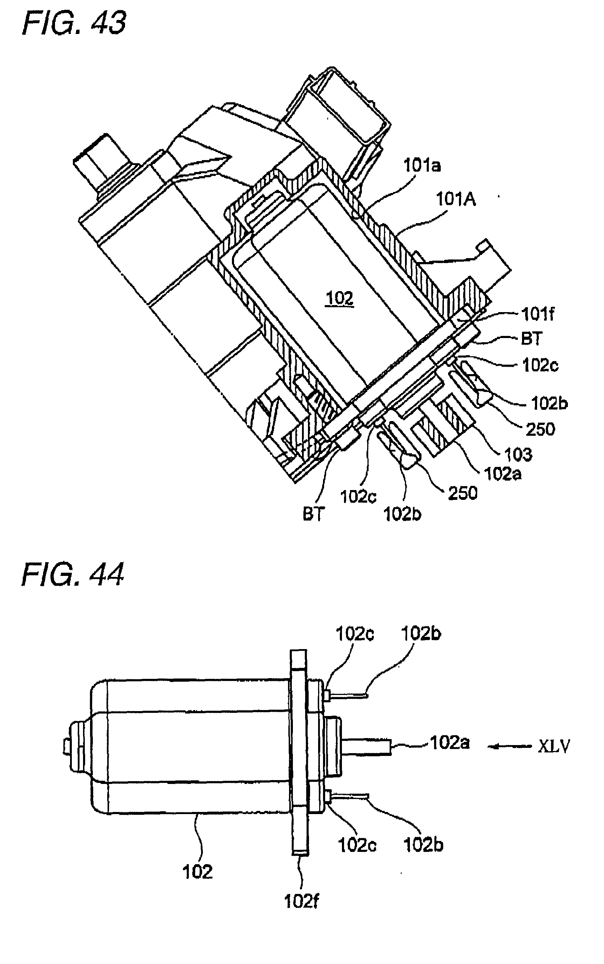

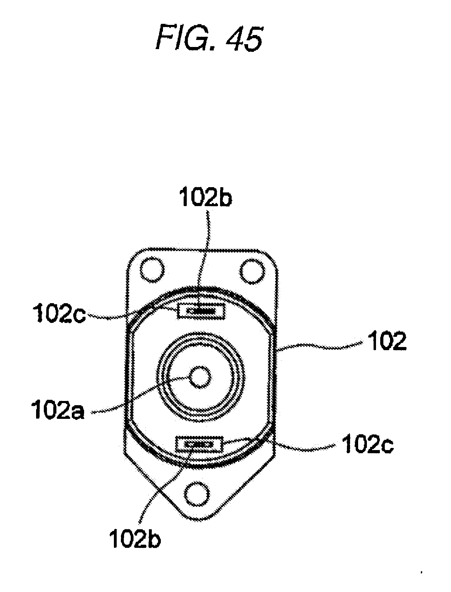

As is shown in Fig. 43, a motor 102 is disposed in a motor compartment 101a of a housing main body 101A and is mounted on the motor compartment 101a by a flange 102f being fixed to an end face of the housing main body 101A with bolts BT. As shown in Figs. 44, 45, the motor 102 has two metallic flat plate-shaped terminals 102b, 102b which are arranged symmetrically across a rotating shaft 102a while being caused to project therefrom. Distal ends of the terminals 102b, 102b are formed into an arc-like shape, and resin bosses 102c, 102c are formed individually at roots of the terminals. The bosses 102c, 102c have a function to prevent short circuit even though there is caused a variation in dimensions due to manufacturing errors when the terminals 102b are assembled into the intermediate terminals 250, which will be described later.

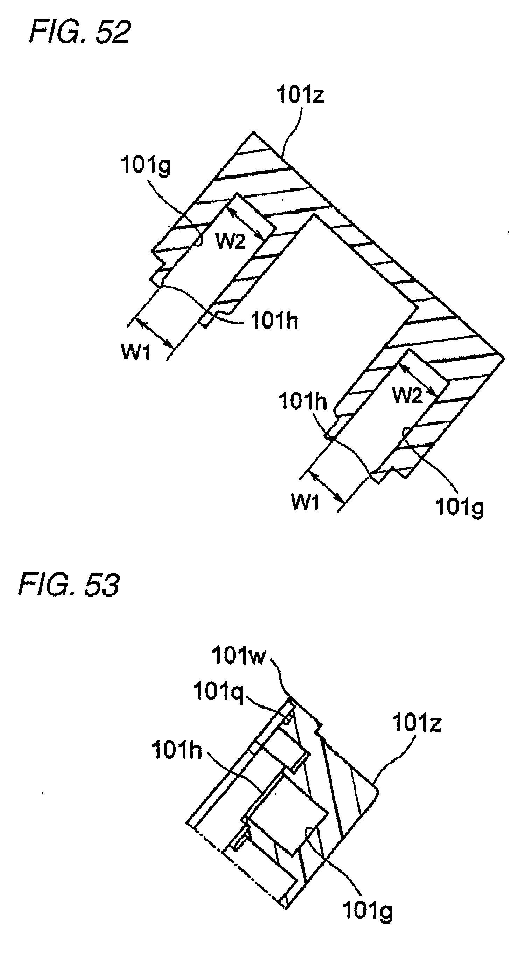

In Figs. 52, 53, receiving portions (recess portions) 1011, 1011 for intermediate terminals 250 are each formed into an angular box-like hole in a cover member main body 101z. Inwardly tapered projecting projections 101h, 101h are formed at entrances of the receiving portions 1011, 1011. A width dimension W1 at the entrance of each receiving portion is made smaller than a width dimension W2 at a deeper side and a width dimension W3 of the intermediate terminal 250 when compressed. Consequently, when the intermediate terminal 250 is mounted on the receiving portion 1011, the intermediate terminal 250 is made difficult to fall therefrom.

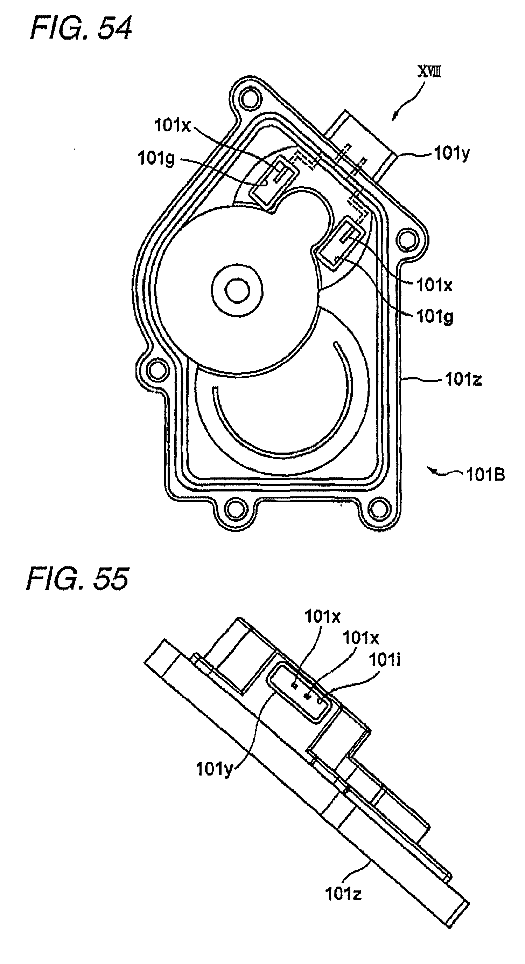

As shown in Fig. 54, inner end portions of coupling members 101x are insert molded so as to project into the corresponding receiving portions 1011 of the cover member main body 101z. As shown in Fig. 55, a small hole 101m, which penetrates the cover member main body 101z, is formed adjacent to the coupling member 101x in an interior of a coupling portion 101y, and this small hole 101m functions as an air bleeder.

Next, the intermediate terminal 250 according to the invention will be described in detail.
The intermediate terminal 250 has a central plate portion 251, a first end plate portion 252 which is coupled to one end of the central plate portion at a center thereof and which extends substantially at right angles to the central plate portion and a second end plate portion 253 which is coupled to the other end of the central plate portion at a center thereof and which extends substantially at right angles to the central plate portion and in an opposite direction to the direction in which the first end plate portion extends.
In addition, two first gaps are formed at both ends of the first end plate portion 252 by bending respective distal ends of the first end plate portion 252 towards a center thereof, and the first gaps constitute first female terminal portions.
Two second gaps are formed at both ends of the second end plate portion by bending respective distal ends of the second end plate portion towards a center thereof, and the second gaps constitute second female terminal portions.

To describe this in more detail, the intermediate terminal 250 is formed integrally by bending a single thin metallic plate through pressing. The intermediate terminal 250 is made up of the central plate portion 251, the first end plate portion 252 which is coupled to one end of the central plate portion 251 at the center thereof and the second end plate portion 253 which is coupled to the other end of the central plate portion 251 at the center thereof, and the central plate portion 251, the first end plate portion 251 and the second end plate portion 253 have almost an equal width.

The first end plate portion 252 and the second end plate portion 253 are bent substantially at right angles to the central plate portion 251 in the different directions.

The first end plate portion 252 is made by bending two half piece portions 252A, 252B which extend from a central portion 252a which is coupled to the central plate portion 251 towards the central portion 252a so as to come nearer to each other. One half piece portion 252A is made up of: an 11th portion 252b which extends a distance which is almost equal to a length of the central plate portion 251 from the central portion 252a; a 12th portion 252c which is bent back at an angle θ1 from an end portion of the 11th portion 252b so as to extend back along the 11th portion 252b a distance which is almost 80% of the 11th portion 252b; a 13th portion 252d which is bent at a shallow angle at a distal end of the 12th portion 252c so as to approach the 11th portion 252b; and a 14th portion 252f which is bent at a distal end of the 13th portion 252d so as to move away from the 11th portion 252b and which extends further only a slight distance. Note that a rising portion 252p is formed on an outer surface of the 12th portion 252c through pressing.

The other half piece portion 252B is made up of: an 21st portion 252g which extends a distance which is almost equal to a length of the central plate portion 251 from the central portion 252a; a 22nd portion 252h which is bent back at an angle θ2 (> θ1) from an end portion of the 21st portion 252g so as to extend back along the 21st portion 252g a distance which is almost 20% of the 21st portion 252g; a 23rd portion 252i which is bent at a distal end of the 22nd portion 252h so as to approach the 21st portion 252g and a 24th portion 252j which is bent at a distal end of the 23rd portion 252i so as to move away from the 21st portion 252g and which extends further only a slight distance.

The second end plate portion 253 is made by bending two half piece portions 253A, 253B which extend from a central portion 253a which is coupled to the central plate portion 251 towards the central portion 253a so as to come nearer to each other.
One half piece portion 253A is made up of: an 11th portion 253b which extends a distance which is almost equal to a length of the central plate portion 251 from the central portion 253a; a 12th portion 253c which is bent back at an angle θ1 from an end portion of the 11th portion 253b so as to extend back along the 11th portion 253b a distance which is almost 80% of the 11th portion 253b; a 13th portion 253d which is bent at a shallow angle at a distal end of the 12th portion 253c so as to approach the 11th portion 253b; and a 14th portion 253f which is bent at a distal end of the 13th portion 253d so as to move away from the 11th portion 253b and which extends further only a slight distance. Note that a rising portion 253p is formed on an outer surface of the 12th portion 253c through pressing.

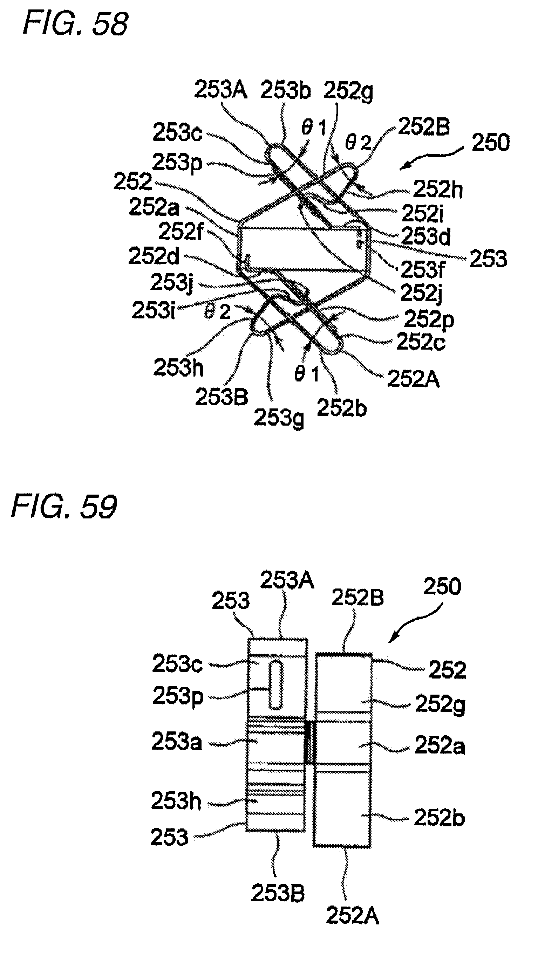

The other half piece portion 253B is made up: of an 21s^{t} portion 253g which extends a distance which is almost equal to a length of the central plate portion 251 from the central portion 253a; a 22nd portion 253h which is bent back at an angle θ2 (> θ1) from an end portion of the 21st portion 253g so as to extend back along the 21st portion 253g a distance which is almost 20% of the 21st portion 253g; a 23rd portion 253i which is bent at a distal end of the 22nd portion 253h so as to approach the 21st portion 253g; and a 24th portion 253j which is bent at a distal end of the 23rd portion 253i so as to move away from the 21st portion 253g and which extends further only a slight distance. The shape of the half piece portion 252A is the same as the shape of the half piece portion 253A, while the shape of the half piece portion 252B is the same as the shape of the half piece portion 253B. Further, the half piece portion 252A is adjacent to the half piece portion 253B, while the half piece portion 252B is adjacent to the half piece portion 253A, as viewed in a direction shown in Fig. 58.

When the half piece portions 252A, 252B of the first end plate portion 252 and the half piece portions 253A, 253B of the second end plate portion 253 of the intermediate terminal 250 are compressed from both sides (vertically in Fig. 58), in one end portion side, a gap (a second female terminal portion) which gets narrower as it extends deeper is produced between the half piece portions 253A, 253B of the second end plate portion 253 which are in contact with each other in close proximity of the central portion 252a of the first end plate portion 252. On the other end portion side, a gap (a first female terminal portion) which gets narrower as it extends deeper is produced between the half piece portions 252A, 252B of the first end plate portion 252 which are in contact with each other in close proximity of the central portion 253a of the second end plate portion 253.

When compressed, end portions of the 13th portions 252d, 253d are in contact with the 11th portions 252b, 253b, respectively, to thereby provide a function to support elastic forces of the 12th portions 252c, 253c, while end portions of the 23rd portions 252i, 253i are in contact with the 21st portions 252g, 253g, respectively, to thereby provide a function to support elastic forces of the 22nd portions 252h, 253h. The 14th portions 252f, 253f and the 24th portions 252j, 253j have a function to facilitate sliding of the 11th portion 252b, 253b and the 21st portions 252g, 253g.

The intermediate terminal 250 which is compressed in the way described above is inserted into the receiving portion 1011 of the cover member 101B from a side where the first end plate portion 252 is mounted to complete the assembling of the intermediate terminal 250. Then, after the assembling, the 11th portions 252b, 253b and the 21st portions 252g, 253g are biased against lateral surfaces of the receiving portion 1011 by elastic deformation force of the half piece portions 252A, 252B, 253A, 253B, thereby an abrupt fall of the intermediate terminal 250 is prevented. Further since the projection 101h is provided on the receiving portion 1011, the intermediate terminal 250 is made difficult to fall therefrom.

Here, as shown in Fig. 54, when the coupling member 101x is insert molded in the receiving portion 1011, by assembling the intermediate terminal 250, an end portion of the coupling member 101x enters the gap defined by the half piece portions 253A, 253B of the second end plate portion 253.

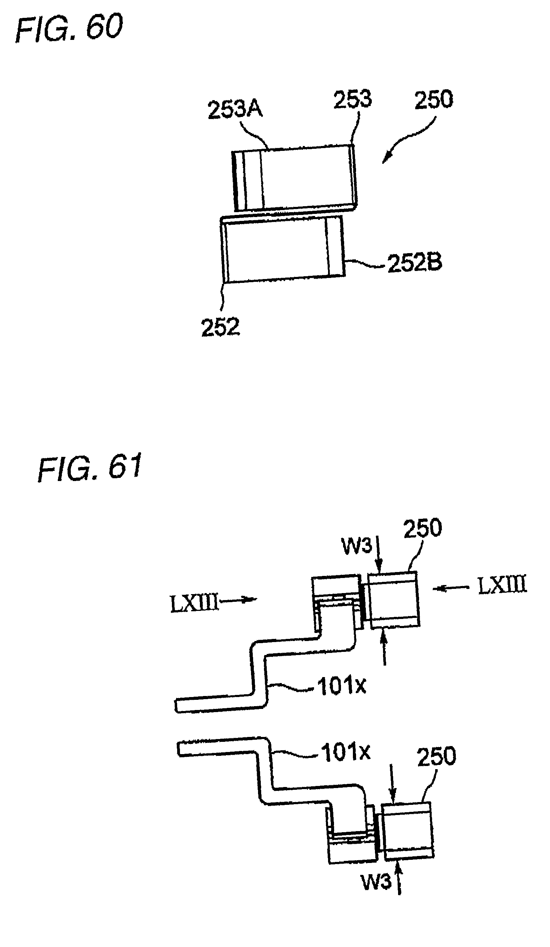

As shown in Figs. 61 to 63, end portions (second male terminal portions) of the coupling members 101x which have entered the gaps defined by the half piece portions 253A, 253B enter between the 12th portion 253c and the 22nd portion 253h which face each other (second female terminal portions) so as to implement an electrical communication therebetween in such a state that friction is given thereto by the elastic deformation force of the half piece portions 253A, 253B. As this occurs, even though there is a variation in dimensions and shape of the coupling members 101x, an ensured electrical communication is secured since the rising portions 253p formed on the 12th portion 253c is in contact with the ends portion of the coupling members 101x.

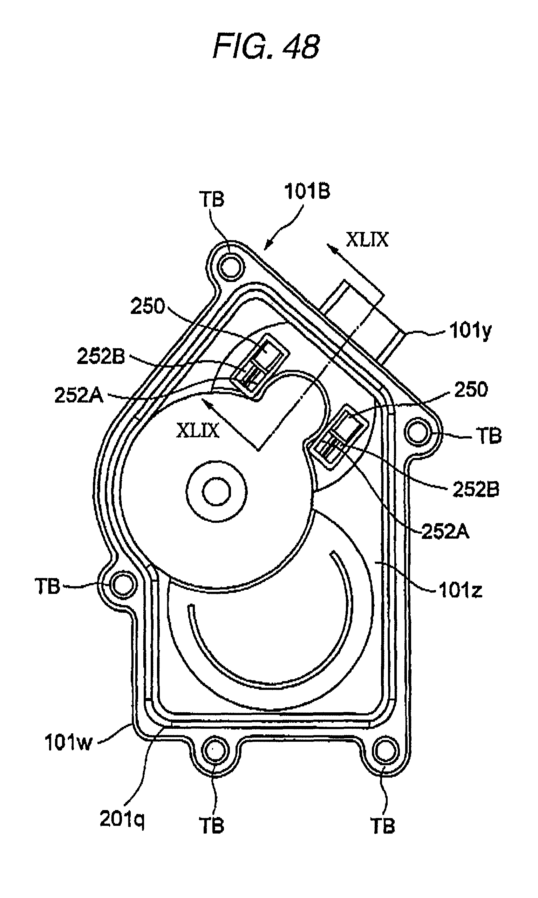

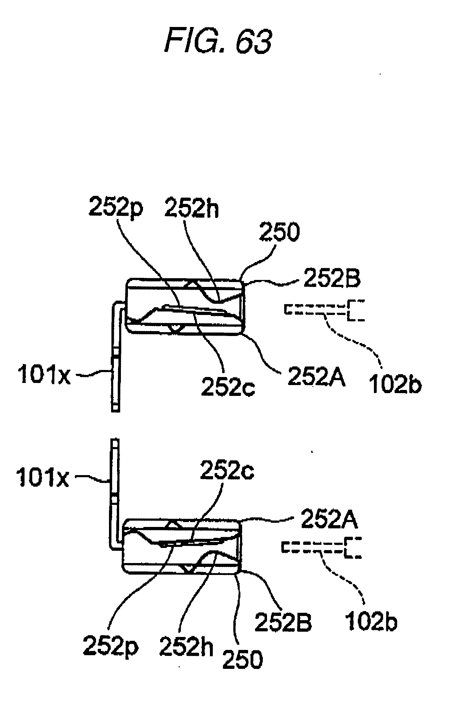

Although it is obvious from Figs. 48, 63, what is exposed from the entrance (not shown) of the receiving portion is the gap defined by the half piece portions 252A, 252B of the first end plate portion 252. Consequently, when the cover member 101B is assembled on to the housing main body 101A in which the motor 102 is assembled as shown in Fig. 43, the terminals 102b, 102b of the motor 102 enter the gaps defined by the half piece portions 252A, 252B of the first end plate portion 252.

As shown in Fig. 43, the terminals (the first male terminal portions) 102b, 102b of the motor 102 which have entered the gaps defined by the half pieces portions 252A, 252B enter between the 12th portion 252c and the 22nd portion 252h which face each other (first female terminal portions) so as to implement an electrical communication therebetween in such a state that friction is given thereto by the elastic deformation force of the half piece portions 253A, 253B. As this occurs, even though there is a variation in dimensions and shape of the terminals 102b, 102b of the motor 102, an ensured electrical communication is secured since the rising portions 252p formed on the 12th portion 252c are in contact with the terminals 102b, 102b of the motor 102.
In this state, the engagement portions of the coupling members and the terminals 102b of the motor 102 are put in a parallel relationship. Namely, in such a state that the terminals of the coupling members and the terminals of the motor extend substantially parallel to each other, the intermediate terminals 250 extend in a direction which is at right angles to the direction in which the terminals extend, and connects of the terminals of the coupling members with the terminals of the motor.

For example, in the event that the intermediate terminals, which serves as female terminals, are disposed in series with the motor terminals and the connector terminals for exterior connection, there is caused a problem that the axial length of the terminals becomes long. In contrast to this, as in the embodiment, the terminals 102b of the motor 102 and the end portions of the coupling members 101x are connected to the intermediate terminals 250 in the parallel fashion, thereby the axial length of the terminals can be made short.

Even though there is a variation in dimensions of the terminals 102b of the motor 102 or positions of the coupling members 101x are caused to deviate, as in the embodiment, by implementing the connection by the intermediate connectors 250 having a pair of female terminal portions, a deviation in position between the terminals 102b of the motor 102 and the coupling members 101x which are insert molded can easily be absorbed. Further, since the rising portions 252p, 253p of the intermediate terminals 250 are formed through pressing, a press contacting force between the terminals 102b of the motor 102, which serve as the male terminals, and the end portions of the coupling members 101x can be enhanced, thereby making it possible to ensure the connection.

Further, the intermediate terminal 250 of the embodiment is configured so that the first female terminal portions and the second female terminal portions are made to open in 180 degrees opposite directions and are connected together via the central plate portion 251, the intermediate terminal 250 can be formed by bending a single thin plate. Furthermore, since the pair of female terminal portions has the same dimensions, no attention has to be paid to directionality at the time of assembling, thereby making it possible to facilitate the assembling of the intermediate terminal 250. Since the pair of female terminal portions is formed by bending the same metallic material, there is caused no fear that a connection failure occurs with the central plate portion 251 which is made in a case when welding or the like is used, this facilitating the manufacturing of intermediate terminals.

Further, even though the intermediate terminal 250 projects from the receiving portion 1011 of the cover member main body 101z, since the intermediate terminal 250 is in contact with the resin boss 102c which is formed at the root of the terminal 102b of the motor 102, the intermediate terminal is prevented from being in contact with the housing main body 101A, resulting in an advantage that there is no risk of connection failure.

Thus, while the invention has been described by reference to the embodiments, the invention should not be construed as being limited to those embodiments, and hence, alterations and improvements can, of course, be made as required. The actuator of the invention can be applied not only to the automatic transmission but also to marine, vehicle and general purpose industrial machines. The intermediate terminal can be applied to other devices than the actuator.

While the invention has been described in detail or by reference to the specific embodiments, it is obvious to those skilled in the art that various alterations and modifications can be made without departing from the spirit and scope of the invention.
This patient application is based on Japanese Patent Application (No. 2007-230105) filed on September 5, 2007, Japanese Patent Application (No. 2008-127260) filed on May 14, 2008, and Japanese Patent Application (No. 2008-209690) filed on August 18, 2008, the contents of which are incorporated herein by reference.

### Industrial Applicability

According to the continuously variable transmission of the invention, the inertia of the rotational element of the actuator can be suppressed, and the high-speed control of the pulley width can be facilitated. By the swing member being interposed between the actuator and the fixed and movable sheaves, even though the movable sheave is inclined, the the actuator is not inclined, thereby making it possible to suppress a reduction in fatigue lives of the respective constituent members.
According to the actuator of the invention, since the second hole is sealed by the seal and the third hole is sealed by the sensor so to produce the closed space, infiltration of foreign matters from the outside through the first hole is suppressed, irrespective of machining accuracies of the first hole and the supporting shaft.
In addition, according to the actuator of the invention, the intermediate terminals extend substantially at right angles to the direction in which the terminals of the coupling members and the terminals of the motor extend, and connect the terminals of the coupling members with the terminals of the motor. Namely, when compared with a case in which the connecting portion between the terminals of the motor and the intermediate terminals and the connecting portion between the intermediate terminals with the coupling members are aligned on a straight line, the actuator of the invention can be made compact in size. Further, even though there is a variation in size and connecting position of the coupling members or terminals, the connection error can be absorbed so as to implement the connection in an ensured fashion. In particular, since, in the event that the coupling member is insert molded, the relative position with the cover member is caused to deviate easily, and the invention is effective when applied to such a case.

## Claims

1. A continuously variable transmission comprising:
a fixed sheave which is fixed to a pulley shaft so as to integrally rotate;
a movable sheave which is supported so as to move in an axial direction along the pulley shaft;
a belt which are disposed between the fixed sheave and the movable sheave; and
an actuator to make the movable sheave move in the axial direction so as to alter a pulley groove width,
wherein the actuator comprises:
an electric motor;
a speed reduction mechanism to transmit a rotational force generated by the electric motor;
a rotational element into which power of the electric motor is inputted via the speed reduction mechanism;
an axially displaceable element which is displaced in the axial direction in accordance with a rotating amount of the rotational element; and
a swing member to swing whose one end is coupled to the axially displaceable element and the other end is coupled to the movable sheave.

2. A continuously variable transmission as set forth in Claim 1,
wherein a bearing is disposed between the other end of the swing member and the movable sheave.

3. An actuator comprising:
a housing which includes a housing main body and a cover member;
an electric motor which is mounted on the housing main body and which has a rotating shaft;
a driving mechanism which includes a gear to which a rotational force is transmitted from the rotating shaft, a rotational element to which the rotational force is transmitted from the gear and an axially displaceable element which is moved in an axial direction in accordance with a rotating movement of the rotational element, and
a sensor to detect an axially moved amount of the axially displaceable element,
wherein the housing main body comprises:
a first hole in which a support shaft of the gear is fitted;
a second hole which accommodates the axially displaceable element and which has an axis parallel to an axis of the first hole; and
a third hole which intersects the second hole and in which the sensor is mounted, wherein
wherein the first, second and third holes being made to communicate with each other,
wherein the second hole is sealed by a seal, and
wherein the third hole is sealed by the sensor.

4. An actuator as set forth in Claim 3,
wherein only a portion of the first hole, the portion in which a supporting shaft of the gear is fitted, is machined.

5. An actuator as set forth in Claim 3 or 4,
wherein the housing main body is made of a metal,
wherein the cover member is made of a resin, and
wherein an contact portion of the housing main body with the cover member and an outer circumferential portion of the first hole lie on the same plane.

6. An actuator as set forth in any of Claims 3 to 5,
wherein an annular sensor collar is fitted on the axially displaceable element,
wherein the axially displaceable element is supported on the housing main body via a cylindrical bush, and
wherein an outside diameter of a portion of the axially displaceable element, the portion on which the sensor collar is fitted, and an outside diameter of a portion of the axially displaceable element, the portion on which the bush is fitted is smaller than a groove root diameter of a male thread groove of the axially displaceable element.

7. An actuator as set forth in any of Claims 3 to 6,
wherein the sensor collar is press fitted on the axially displaceable element,
wherein the sensor is a rotary potentiometer to measure a displacement amount through rotation of an arm portion, and
wherein the arm portion is biased in a direction in which the sensor collar, which is press fitted on the axially displaceable element, is prevented from being dislocated by a coil spring disposed in an interior of the sensor.

8. An actuator as set forth in any of Claims 3 to 7,
wherein the arm portion projects outwards from an outside diameter of a spigot portion of the sensor which fits in the third hole.

9. A continuously variable transmission as set forth in Claim 1 or 2,
wherein the actuator is provided outside the housing which covers the continuously variable transmission, and
wherein the swing member extends via an opening provided in the housing.

10. A continuously variable transmission as set forth in Claim 9,
wherein the continuously variable transmission comprises a drive pulley portion and a driven pulley portion which each have a fixed sheave and a movable sheave, and
wherein when viewed in a direction which is at right angles to an axis of the drive pulley portion, the actuator is disposed between the drive pulley portion and the driven pulley portion.

11. A continuously variable transmission as set forth in Claim 9 or 10,
wherein the rotational element is a nut or a threaded shaft,
wherein the axially displaceable element is a threaded shaft or a nut, and
wherein the ball screw mechanism is made up of the nut and the threaded shaft.

12. A continuously variable transmission as set forth in any of Claims 9 to 11,
wherein the actuator comprises a rotary potentiometer to detect a rotational angle of the rotational element.

13. An actuator as set forth in Claim 3,
wherein a coupling member having conductive terminals is provided on the cover member of the housing so as to be integral with the cover member,
wherein the motor has conductive terminals which extend substantially parallel to a direction in which the terminals of the coupling member extend,
wherein the cover member has conductive intermediate terminals provided thereon, and
wherein the intermediate terminals extend so as to be substantially at right angles to the directions in which the terminals of the coupling member and the terminals of the motor extend, and connect the terminals of the coupling member with the terminals of the motor.

14. An actuator as set forth in Claim 13,
wherein the cover member has a recess portion which receives the intermediate terminals, and
wherein a dimension of the recess portion at an entrance side is made smaller than a dimension of the recess portion at a deeper side.

15. An intermediate terminal comprising:
a central plate portion;
a first end plate portion which is coupled to one end of the central plate portion at a center thereof and which extends substantially at right angles to the central plate portion; and
a second end plate portion which is coupled to the other end of the central plate portion at a center thereof and which extends substantially at right angles to the central plate portion and in an opposite direction to the direction in which the first end plate portion extends,
wherein two first gaps are formed at both ends of the first end plate portion by bending respective distal ends of the first end plate portion towards a center thereof,
wherein two second gaps are formed at both ends of the second end plate portion by bending respective distal ends of the ends of the second end plate portion towards a center thereof, and
wherein the first gaps constitute first female terminal portions and the second gaps constitute second female terminal portions.

16. An intermediate terminal as set forth in Claim 15,
wherein the first female terminal portions and the second female terminal portions are made open in opposite directions.

17. An intermediate terminal as set forth in Claim 15 or 16,
wherein the two first female terminal portions have different shapes, and
wherein the two second female terminal portions have different shapes.

18. Ain intermediate terminal as set forth in any of Claims 15 to 17,
wherein a projection is formed each on at least one of the first female terminal portions and on at least one of the second female terminal portions.
